# FASCICULE DE BREVET EUROPEEN

(11) **EP 4 068 327 B1**
(45) Date de publication et mention de la délivrance du brevet: **22.10.2025**
(21) Numéro de dépôt: 22166382.6
(22) Date de dépôt: 01.04.2022
(51) Int. Cl.: H01H 47/22, H01H 45/14, H01H 71/12

(54) **APPAREIL ELECTRIQUE POUR LAISSER OU NON UNE SOURCE DE COURANT ALTERNATIF ALIMENTER UNE CHARGE, EN FONCTION D'ORDRES REÇUS PAR RADIOFREQUENCE, ET CIRCUIT LE COMPORTANT**
ELEKTRISCHES GERÄT, MIT DEM EINE WECHSELSTROMQUELLE JE NACH DEN ÜBER EINE FUNKFREQUENZ EMPFANGENEN BEFEHLEN EINE LAST SPEISEN KANN ODER NICHT, UND SCHALTKREIS MIT DIESEM GERÄT
ELECTRICAL DEVICE FOR ALLOWING OR NOT ALLOWING AN ALTERNATING CURRENT SOURCE TO SUPPLY A CHARGE, ACCORDING TO ORDERS RECEIVED BY RADIOFREQUENCY, AND CIRCUIT COMPRISING SAME

(30) Priorité: 01.04.2021 FR 2103420
(43) Date de publication de la demande: 05.10.2022
(73) Titulaire: Legrand France, 87000 Limoges (FR); Legrand SNC, 87000 Limoges (FR)
(72) Inventeur: MASSE, Dany, 06250 Mougins (FR); SCALVINI, Michele, 21050 Cuasso al Monte (IT)
(74) Mandataire: Santarelli

(56) Documents cités:
- EP-A1- 0 774 768
- EP-A1- 2 282 321
- EP-A1- 3 709 333
- WO-A1-2011/128916
- JP-A- 2002 071 734
- US-A1- 2012 200 977
- US-A1- 2013 135 111

## Description

### Domaine technique de l'invention

L'invention concerne la commande d'alimentation et le suivi de consommation d'une charge dans une installation électrique domestique ou tertiaire via un réseau radiofréquence.

### Etat de la technique

Il est connu de l'état de la technique des contacteurs, par exemple du document EP3709333 A1, tels que représentés sur les figures 1 à 4 des dessins annexés, sur lesquels :
- La figure 1 est une vue en perspective d'un contacteur connu, prise à droite et en avant de ce contacteur ;
- La figure 2 est une représentation très schématique du circuit électrique interne du contacteur connu ;
- La figure 3 est une vue de face du contacteur connu juxtaposé à un disjoncteur de petit ampérage, ici 2 A, lui-même juxtaposé à un disjoncteur d'assez fort ampérage, ici 20 A, sur un rail de support ; et
- La figure 4 est une représentation schématique des appareils montrés sur la figure 3 et des câbles les raccordant entre eux ainsi qu'à un organe de commande et à une charge.

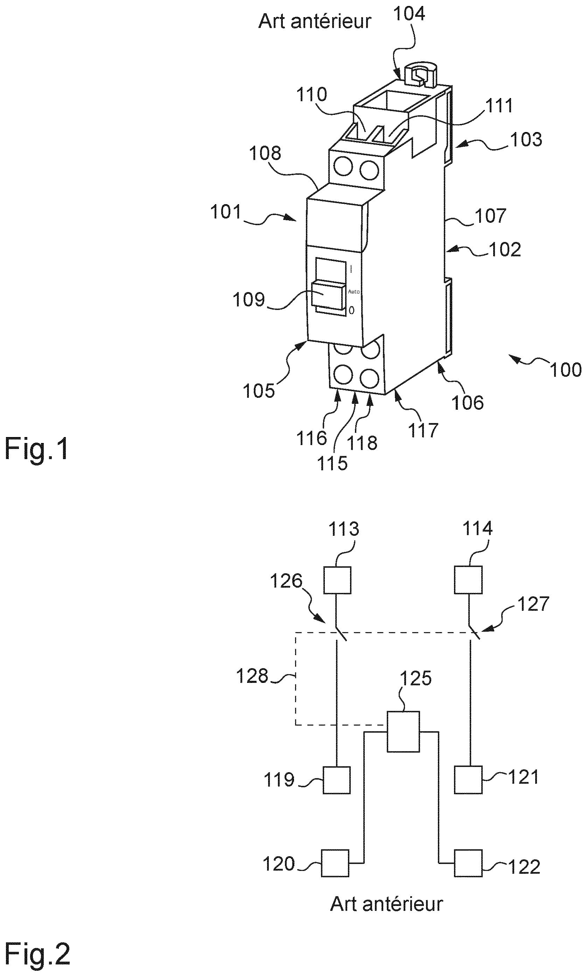

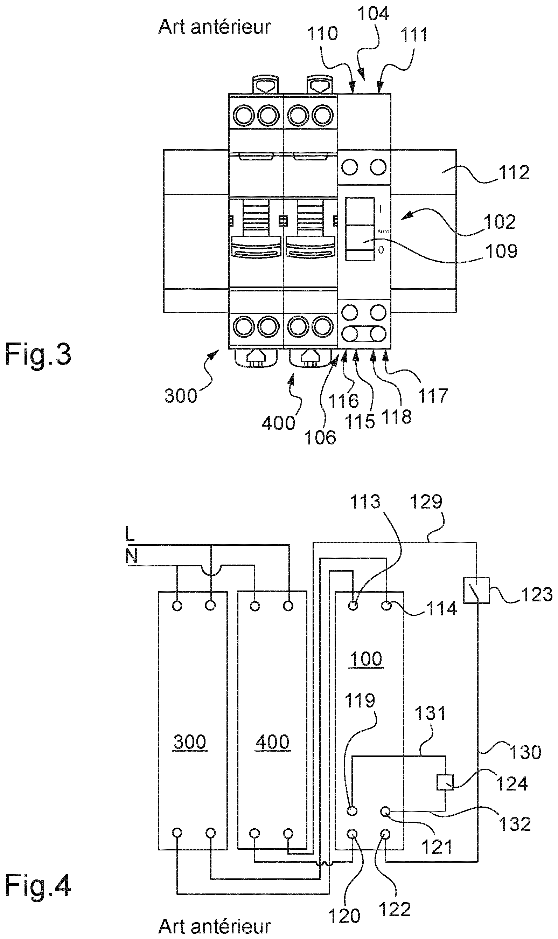

Le contacteur 100 montré sur la figure 1 est au format modulaire, c'est-à-dire qu'il présente une forme globalement parallélépipédique avec deux faces principales, respectivement une face gauche 101 et une face droite 102, et des faces latérales s'étendant de l'une à l'autre des faces principales 101 et 102, à savoir une face arrière 103, une face supérieure 104, une face avant 105 et une face inférieure 106,la face arrière 103 présentant une échancrure 107 pour le montage du contacteur 100 sur un rail de support tel que 112 normalisé à profil en Ω, notamment visible sur la figure 3, d'une enveloppe de protection telle qu'une armoire, un boitier ou un coffret électrique. Conformément au format modulaire, la largeur du contacteur 100, qui correspond à la distance entre la face gauche 101 et la face droite 102, est un multiple d'une valeur normalisée, connue sous le nom de « *module »,* qui est de l'ordre de 18 mm. Le contacteur 100 a une largeur d'un module.

La face avant 105 présente, en position centrale, un nez 108 présentant une touche 109, pouvant prendre sélectivement l'une de trois positions, respectivement une position de fonctionnement automatique, une position de fonctionnement forcé et une position d'arrêt.

En position de fonctionnement automatique, le contacteur 100 permet ou non l'alimentation d'une charge suivant respectivement qu'un organe de commande est passant ou bloqué. En position de fonctionnement forcé, le contacteur 100 permet en permanence l'alimentation de la charge. En position d'arrêt, le contacteur 100 empêche en permanence l'alimentation de la charge.

La face supérieure 104 du contacteur 100 présente deux orifices d'introduction 110 et 111 donnant accès respectivement à une borne de raccordement 113 et à une borne de raccordement 114 (figure 2). L'orifice d'introduction 110 et la borne de raccordement 113 sont situés à gauche. L'orifice d'introduction 111 et la borne de raccordement 114 sont situés à droite.

La face inférieure 106 présente quatre orifices d'introduction 115, 116, 117 et 118, donnant accès respectivement à une borne de raccordement 119, une borne de raccordement 120, une borne de raccordement 121 et à une borne de raccordement 122 (figure 2). L'orifice d'introduction 115, l'orifice d'introduction 116, la borne de raccordement 119 et la borne de raccordement 120 sont situés à gauche. L'orifice d'introduction 117, l'orifice d'introduction 118, la borne de raccordement 121 et la borne de raccordement 122 sont situés à droite.

Chacune des bornes de raccordement 113, 114, 119, 120, 121 et 122 est prévue pour recevoir un tronçon d'extrémité dénudé d'un câble électrique.

Les bornes de raccordement 113 et 114 situées en haut sont prévues pour être raccordées à deux pôles d'un réseau de distribution de l'électricité, ici respectivement le neutre et la phase, par l'intermédiaire d'un disjoncteur tel que 300 (figures 3 et 4) de protection de la charge que doit alimenter ou non le contacteur 100.

Les bornes de raccordement 119 et 121 sont prévues pour être raccordées à cette charge.

La borne de raccordement 122 est prévue pour être raccordée à un premier côté d'un organe de commande tel que 123 (figure 4). Le second côté de l'organe de commande est prévu pour être raccordé à l'une de bornes de départ, ici la borne de phase, d'un disjoncteur de protection tel que 400 (figures 3 et 4), prévu pour éviter des surintensités dans le circuit comportant l'organe de commande tel que 123 et une bobine de pilotage 125 que comporte le contacteur 100.

La borne de raccordement 120 est prévue pour être raccordée à l'autre borne de départ de ce disjoncteur de protection tel que 400, ici la borne de neutre.

Tel que visible sur la figure 2, le circuit électrique interne du contacteur 100 comporte la bobine 125 et deux paires de contacts 126 et 127, dont chacune comporte un contact fixe et un contact mobile, la bobine 125 étant liée à chacune des paires de contacts 126 et 127 via une transmission mécanique de pilotage 128, pour leur faire prendre soit un état bloqué (contact mobile à l'écart du contact fixe) soit un état passant (contact mobile en appui sur le contact fixe).

Un premier côté de la paire de contacts 126 est relié à la borne de raccordement 113. Le second côté de la paire de contacts 126 est relié à la borne de raccordement 119. Un premier côté de la paire de contacts 127 est relié à la borne de raccordement 114. Le second côté de la paire de contacts 127 et relié à la borne de raccordement 121. Un premier côté de la bobine 125 est relié à la borne de raccordement 120. Le second côté de la bobine 125 est relié à la borne de raccordement 122.

Lorsque la tension du réseau est présente entre les bornes 120 et 122, la bobine 125 est activée et fait passer les paires de contacts 126 et 127 à l'état passant. La borne 119 est alors reliée à la borne 113, tandis que la borne 121 est reliée à la borne 114, de sorte que la tension du réseau, qui est prévue pour être présente en permanence entre les bornes 113 et 114 (bornes d'arrivée), est également présente entre les bornes 119 et 121 (bornes de départ), grâce à quoi la charge disposée entre les bornes 119 et 121 est alimentée.

En l'absence de la tension du réseau entre les bornes 120 et 122, la bobine 125 est désactivée, les paires de contacts 126 et 127 sont à l'état bloqué, de sorte que la charge disposée entre les bornes 119 et 121 n'est pas alimentée.

Tel que représenté sur la figure 3 et conformément au format modulaire, le contacteur 100 est configuré pour appartenir à une rangée d'appareils modulaires disposés côte-à-côte en étant fixés par l'arrière sur le rail support 112 disposé horizontalement.

Le contacteur 100 est configuré pour être raccordé à un disjoncteur 300 calibré ici à 20 A et à un disjoncteur 400 calibré ici à 2 A.

Les disjoncteurs 300 et 400 comportent classiquement en partie supérieure deux bornes d'arrivée et en partie inférieure deux bornes de départ, le cheminement du courant entre les bornes d'arrivée et de départ étant interrompu si l'intensité prend une valeur extrêmement élevée (court-circuit) ou si l'intensité dépasse l'intensité calibrée de façon prolongée.

Les bornes de raccordement 113 et 114 situées en haut sont prévues pour être raccordées aux bornes de départ du disjoncteur 300.

La borne de raccordement 120 est prévue pour être raccordée à la borne de départ du disjoncteur 400 correspondant au pôle de neutre. Tels que représentés, le disjoncteur 300 et le disjoncteur 400 ont, chacun, une forme globalement parallélépipédique et sont au format modulaire. Chacun présente une largeur d'un module.

Le câblage du contacteur 100 et des disjoncteurs 300 et 400 entre eux et avec un organe de commande 123 et une charge 124 est illustré à la figure 4.

L'organe de commande 123 peut prendre deux états stables, respectivement passant et bloqué. Dans l'état passant, ses deux côtés sont reliés électriquement de sorte qu'un courant électrique peut passer de l'un à l'autre. Dans l'état bloqué, ses deux côtés sont isolés électriquement l'un de l'autre. Ici, l'organe de commande 123 fait partie d'un ensemble de raccordement au réseau électrique de distribution de l'électricité par lequel il est commandé : il prend l'état passant pendant une tranche horaire où l'électricité est à tarif réduit, et prend l'état bloqué pendant une tranche horaire où l'électricité est à tarif nominal.

Le contacteur 100 est prévu pour que la charge 124, par exemple un chauffe-eau électrique à accumulation, soit alimentée pendant la tranche horaire où l'électricité est à tarif réduit (organe de commande 123 à l'état passant) et non alimentée pendant la tranche horaire à tarif nominal (organe de commande 123 à l'état bloqué).

La borne de raccordement 122 du contacteur 100 est raccordée par un câble 130 à un premier côté de l'organe de commande 123. Le second côté de l'organe de commande 123 est relié par un câble 129 à l'une des bornes du disjoncteur 400, ici le pôle de phase.

La charge 124 est raccordée d'un premier côté par un premier câble 131 à la borne de raccordement 119 et du second côté par un second câble 132 à la borne de raccordement 121.

On voit que quand l'organe de commande 123 est à l'état passant, la tension du réseau apparait entre les bornes 120 et 122, la bobine 125 est activée, les paires de contacts 126 et 127 sont à l'état passant et la charge 124 est alimentée. Quand l'organe de commande 123 est à l'état bloqué, il n'y a pas de tension entre les bornes 120 et 122, la bobine 125 est désactivée, les paires de contacts 126 et 127 sont à l'état bloqué et la charge 124 n'est pas alimentée.

Le disjoncteur 400 sert à protéger le circuit comportant l'organe de commande 123 et la bobine 125, ce circuit se trouvant entre les bornes de départ du disjoncteur 400. Etant donné qu'une intensité relativement faible circule dans ce circuit, le disjoncteur 400 est calibré à une intensité relativement faible, ici 2 A.

Le disjoncteur 300 sert à protéger le circuit comportant la charge 124, ce circuit se trouvant entre les bornes de départ du disjoncteur 300, qui est calibré en fonction de l'intensité que peut consommer la charge 124, ici 20 A.

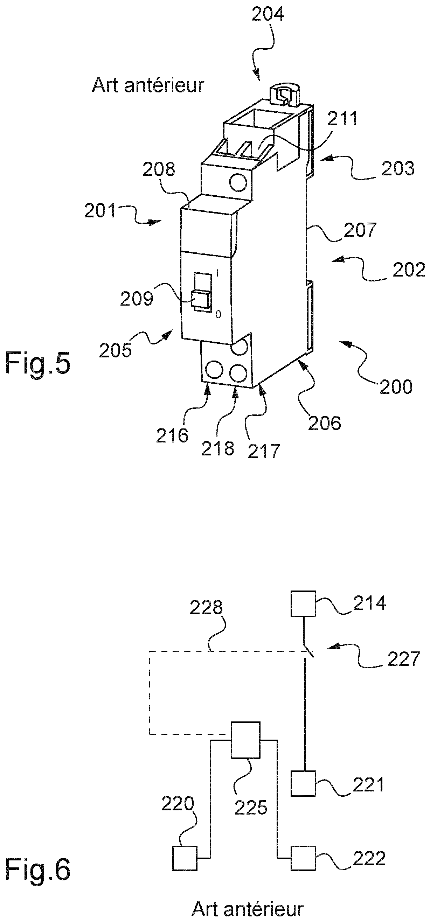

Il est également connu de l'état de la technique des télérupteurs tels que représentés sur les figures 5 à 8 des dessins annexés, sur lesquels :
- La figure 5 est une vue en perspective d'un télérupteur connu, prise à droite et en avant de ce télérupteur ;
- La figure 6 est une représentation très schématique du circuit électrique interne du télérupteur connu ;

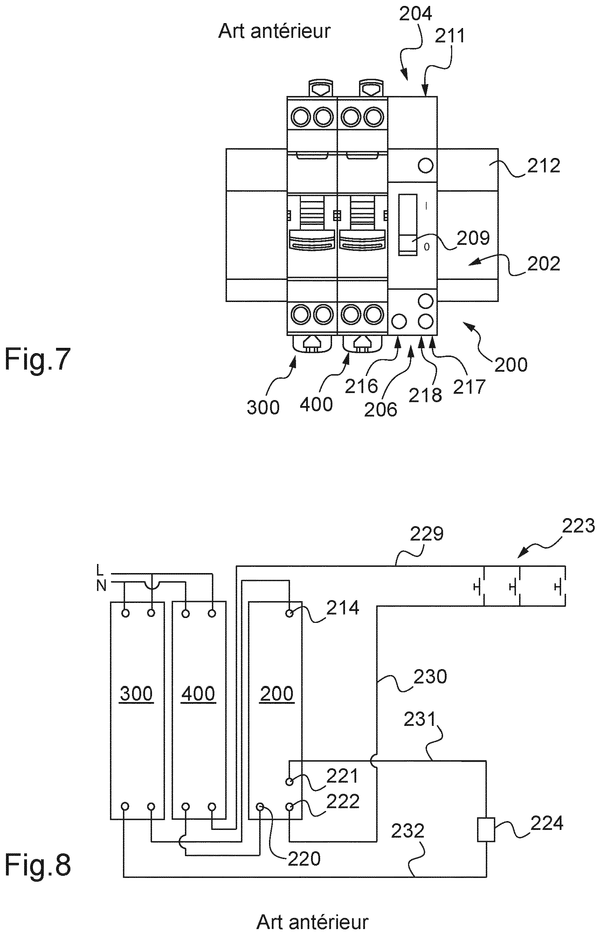

- La figure 7 est une vue de face du télérupteur connu juxtaposé à un disjoncteur de petit ampérage, ici 2 A, lui-même juxtaposé à un disjoncteur d'assez fort ampérage, ici 20 A, sur un rail de support ; et
- La figure 8 est une représentation schématique des appareils montrés sur la figure 7 et des câbles les raccordant entre eux ainsi qu'à un organe de commande et à une charge.

Tout comme le contacteur 100, le télérupteur 200 montré sur la figure 5 est au format modulaire, avec une largeur d'un module.

Le télérupteur 200 a ainsi une forme globalement parallélépipédique avec deux faces principales, respectivement une face gauche 201, une face droite 202 et des faces latérales s'étendant de l'une à l'autre des faces principales 201 et 202, à savoir une face arrière 203, une face supérieure 204, une face avant 205 et une face inférieure 206.

La face arrière 203 présente une échancrure 207 pour le montage du télérupteur 200 sur un rail de support tel que 212 normalisé à profil en Ω, notamment visible sur la figure 7, d'une enveloppe de protection telle qu'une armoire, un boitier ou un coffret électrique.

La face avant 205 présente, en position centrale, un nez 208 présentant une touche 209, pouvant prendre sélectivement deux positions, respectivement une position de fonctionnement et une position d'arrêt.

En position de fonctionnement, le télérupteur 200 permet ou non l'alimentation d'une charge, la transition s'opérant à chaque fois qu'un organe de commande passe de l'état bloqué à l'état passant, l'organe de commande étant typiquement un bouton-poussoir. En position d'arrêt, le télérupteur 200 empêche en permanence l'alimentation de la charge.

La face supérieure 204 du télérupteur 200 présente un orifice d'introduction 211 donnant accès à une borne de raccordement 214 (figure 6).

La face inférieure 206 présente trois orifices d'introduction 216, 217 et 218, donnant accès respectivement aux bornes de raccordement 220, 221 et 222 (figure 6). L'orifice d'introduction 216 et la borne de raccordement 220 sont situés à gauche. Les orifices d'introduction 211, 217 et 218 ainsi que les bornes de raccordement 214, 221 et 222 sont situés à droite.

Chacune des bornes de raccordement 214, 220, 221 et 222 est prévue pour recevoir un tronçon d'extrémité dénudé d'un câble électrique.

La borne de raccordement 214 située en haut est prévue pour être raccordée à un pôle d'un réseau de distribution de l'électricité, ici la phase, par l'intermédiaire d'un disjoncteur 300 (figures 7 et 8) de protection de la charge que doit alimenter ou non le télérupteur 200.

La borne 221 est prévue pour être raccordée à un premier côté de cette charge.

L'une des bornes de départ du disjoncteur 300, ici au pôle de neutre, est prévue pour être raccordée au second côté de cette charge. L'autre borne de départ du disjoncteur 300, ici au pôle de phase, est prévue, comme il vient d'être indiqué, pour être raccordée à la borne 214.

La borne 222 est prévue pour être raccordée à un premier côté d'un organe de commande tel que 223 (figure 8). Le second côté de l'organe de commande 223 est prévu pour être raccordé à l'une des bornes de départ d'un disjoncteur tel que 400 (figures 7 et 8) de protection, ici la borne de départ au pôle de phase.

La borne de raccordement 220 est prévue pour être raccordée à l'autre borne de départ du disjoncteur 400, qui est au pôle de neutre.

Tel que visible sur la figure 6, le circuit électrique interne du télérupteur 200 comporte une bobine 225 et une paire de contacts 227, comportant un contact fixe et un contact mobile, la bobine 225 étant liée à la paire de contacts 227 via une transmission mécanique de pilotage 228, pour lui faire prendre soit un état bloqué (contact mobile à l'écart du contact fixe) soit un état passant (contact mobile en appui sur le contact fixe).

Un premier côté de la paire de contacts 227 est relié à la borne de raccordement 214. Le second côté de la paire de contacts 227 est relié à la borne de raccordement 221. Un premier côté de la bobine 225 est relié à la borne de raccordement 220. Le second côté de la bobine 225 est relié à la borne de raccordement 222.

En l'absence de la tension du réseau entre les bornes 220 et 222, la bobine 225 est désactivée, ce qui est sans effet sur la paire de contacts 227, vu l'agencement de la transmission 228. Lorsque la tension du réseau se met à être présente entre les bornes 220 et 222, la bobine 225 passe de l'état désactivé à l'état activé et, vu l'agencement de la transmission 228, fait changer d'état la paire de contacts 227, c'est-à-dire que si la paire de contacts 227 était à l'état bloqué elle prend l'état passant alors que si elle était à l'état passant elle prend l'état bloqué. Lorsque la tension du réseau se met à être absente entre les bornes 220 et 221, la bobine 225 passe à l'état désactivé, ce qui est sans effet sur la paire de contacts 227, vu l'agencement de la transmission 228.

Lorsque la paire de contacts 227 est à l'état passant, la borne 221 est reliée à la borne 214, de sorte que la borne 221 est alors au même potentiel que la borne 214, prévue pour être raccordée à l'une des bornes de départ du disjoncteur 300, ici au pôle de phase. Le premier côté de la charge, prévu pour être raccordé à la borne 221, est alors au même potentiel, et comme le second côté de la charge est prévu pour être raccordé à l'autre borne de départ du disjoncteur 300, la charge est alimentée.

Lorsque la paire de contacts 227 est à l'état bloqué, la borne 221 n'est pas reliée à la borne 214, de sorte que la charge raccordée à la borne 221 n'est pas alimentée.

Tel que représenté sur la figure 7 et conformément au format modulaire, le télérupteur 200 est configuré pour appartenir à une rangée d'appareils modulaires disposés côte-à-côte en étant fixés par l'arrière sur le rail de support 212 disposé horizontalement.

Comme il vient d'être expliqué, le télérupteur 200 est configuré pour être raccordé au disjoncteur 300, calibré ici à 20 A, et au disjoncteur 400, calibré ici à 2 A.

Les disjoncteurs 300 et 400 sont semblables aux disjoncteurs présentés précédemment avec le contacteur 100.

Le câblage du télérupteur 200 et des disjoncteurs 300 et 400 entre eux et avec un organe de commande 223 et une charge 224 est illustré à la figure 8.

L'organe de commande 223 peut prendre deux états, respectivement passant ou bloqué. Dans l'état passant, les deux côtés de l'organe de commande 223 sont reliés électriquement de sorte qu'un courant électrique peut passer de l'un à l'autre. Dans l'état bloqué, les deux côtés sont isolés électriquement l'un de l'autre. L'état bloqué est pris par défaut, c'est-à-dire en l'absence d'action d'un utilisateur. L'état passant est pris lorsqu'un utilisateur agit sur l'organe de commande 223. Ici, l'organe de commande 223 est un bouton-poussoir servant à commander la charge 224 qui est un point lumineux. Tel qu'illustré, d'autres organes de commande semblables peuvent être raccordés en parallèle.

La borne de raccordement 222 du télérupteur 200 est raccordée par un câble 230 à un premier côté de l'organe de commande 223. Le second côté de l'organe de commande 223 est relié par un câble 229 à l'une des bornes du disjoncteur 400, ici le pôle de phase.

La charge 224 est raccordée d'un premier côté par un premier câble 231 à la borne de raccordement 221 et du second côté par un second câble 232 à la borne de départ correspondante du disjoncteur 300.

On voit que quand l'organe de commande 223 est actionné pour prendre l'état passant, la tension du réseau apparait entre les bornes 220 et 222, la bobine 225 est activée, de sorte que la paire de contacts 227 change d'état. Ainsi, à chaque fois que l'organe de commande 223 est actionné pour prendre l'état passant, la charge 224 cesse d'être alimentée si elle était en train d'être alimentée ou bien elle se met à être alimentée si elle n'était pas alimentée.

Le disjoncteur 400 sert à protéger le circuit comportant l'organe de commande 223 et la bobine 225, ce circuit se trouvant entre les bornes de départ du disjoncteur 400. Etant donné qu'une intensité relativement faible circule dans ce circuit, le disjoncteur 400 est calibré à une intensité relativement faible, ici 2 A.

Le disjoncteur 300 sert à protéger le circuit comportant la charge 224, ce circuit se trouvant entre les bornes de départ du disjoncteur 300, qui est calibré en fonction de l'intensité que peut consommer la charge 224, ici 20 A.

On notera que le contacteur 100 décrit ci-dessus est à deux paires de contacts, c'est-à-dire qu'il comporte un chemin de courant vers la charge pour chacun des deux pôles du réseau et que chacun de ces chemins de courant comporte une paire de contacts pour y laisser passer ou non le courant.

Il existe également des contacteurs à une seule paire de contacts où, de même que pour le télérupteur 200, il y a un seul chemin de courant vers la charge pour un seul pôle du réseau avec une paire de contacts dans ce chemin pour y laisser passer ou non le courant.

On notera enfin que la demande de brevet français 2 906 075 décrit un exemple de réalisation d'un télérupteur dont la transmission mécanique de pilotage 228 peut être modifiée, en omettant une biellette et un ressort, pour transformer cette transmission 228 en une transmission 128, de sorte que l'appareil n'est plus un télérupteur mais un contacteur.

Il est également connu, notamment par la demande de brevet français 3 093 869 correspondant à la demande de brevet européen EP 3 709 333, des contacteurs et des télérupteurs configurés pour appliquer une tension de sécurité à l'organe de commande, pour transmettre par radiofréquence l'intensité du courant d'alimentation de la charge, et pour répondre à des ordres reçus par radiofréquence.

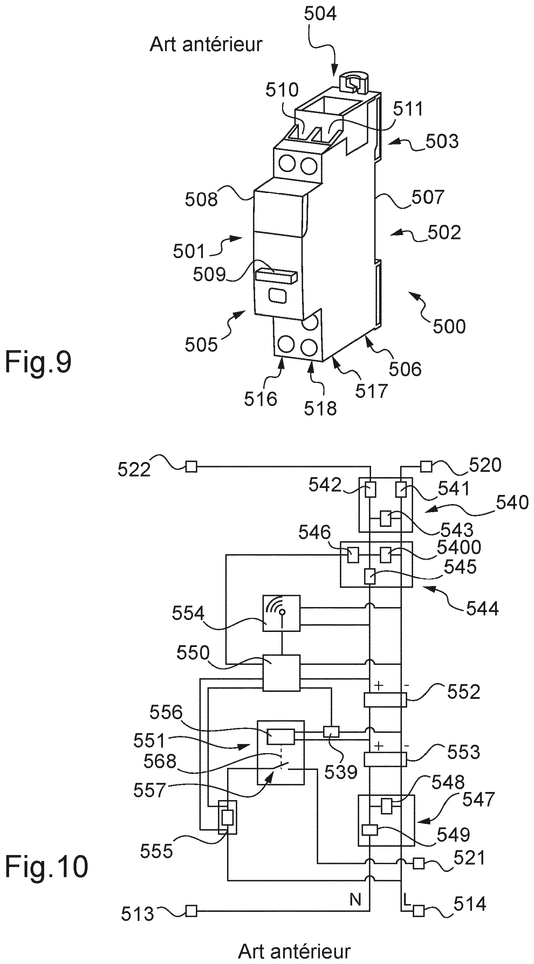

De tels appareils électriques sont représentés sur les figures 9 à 12 des dessins annexés, sur lesquels :
- La figure 9 est une vue en perspective d'un tel appareil électrique, qui est un contacteur, prise à droite et en avant de ce contacteur ;
- La figure 10 est une représentation très schématique du circuit électrique interne de ce contacteur ;

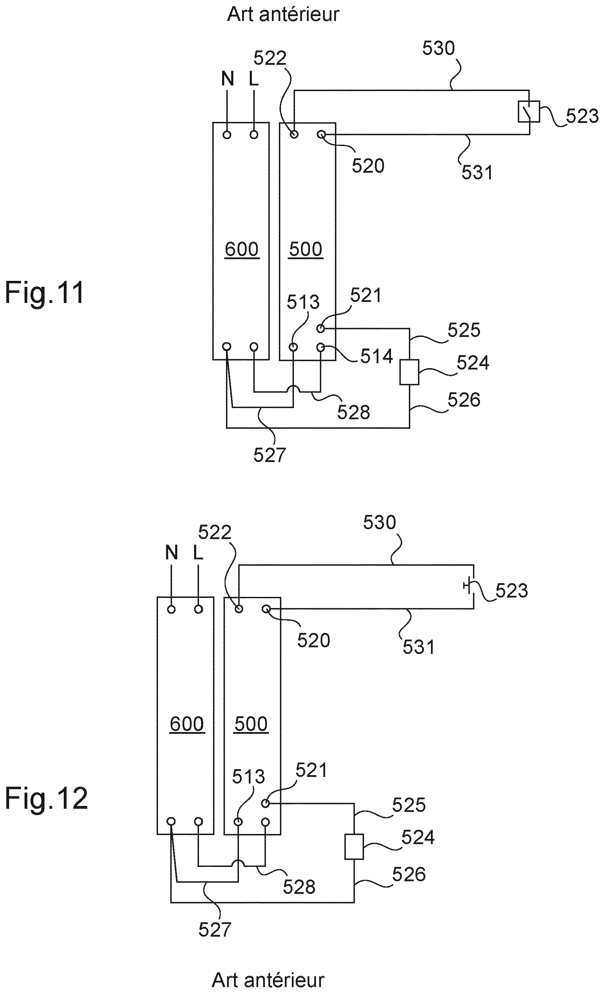

- La figure 11 est une représentation schématique de ce contacteur, d'un disjoncteur, d'un organe de commande et d'une charge ainsi que des câbles les raccordant pour former un circuit électrique faisant partie d'une installation électrique domestique ou tertiaire ; et
- La figure 12 est semblable à la figure 11, mais avec l'appareil électrique qui est un télérupteur au lieu d'un contacteur.

L'appareil électrique 500 montré sur les figures 9 à 11 est un contacteur configuré pour appliquer une tension de sécurité à l'organe de commande, pour transmettre par radiofréquence l'intensité du courant d'alimentation de la charge, et pour répondre à des ordres reçus par radiofréquence.

Un télérupteur, décrit ultérieurement à l'appui de la figure12, est identique sauf que sa transmission de pilotage, qui comporte une partie logique, par exemple basée sur un microcontrôleur, est programmée différemment : alors que dans le contacteur la transmission de pilotage est programmée pour que les transitions de l'organe de commutation entre l'état bloqué et l'état passant suivent les transitions entre l'état bloqué et l'état passant de l'organe de commande, dans le télérupteur la transmission de pilotage est programmée pour que les transitions de l'organe de commutation entre l'état bloqué et l'état passant suivent uniquement les transitions de l'état bloqué à l'état passant de l'organe de commande.

Pour simplifier, dans la description qui suit, on a employé la même référence numérique 500 pour le premier mode de réalisation de l'appareil électrique (contacteur) et pour le deuxième mode de réalisation (télérupteur).

Tout comme le contacteur 100 et le télérupteur 200, l'appareil électrique 500 montré sur la figure 9 est au format modulaire, avec une largeur d'un module.

L'appareil électrique 500 a ainsi une forme globalement parallélépipédique avec deux faces principales, respectivement une face gauche 501 et une face droite 502, et des faces latérales s'étendant de l'une à l'autre des faces principales 501 et 502, à savoir une face arrière 503, une face supérieure 504, une face avant 505 et une face inférieure 506.

La face arrière présente une échancrure 507 pour le montage de l'appareil électrique 500 sur un rail de support normalisé à profil en Ω, tel que le rail 112 (figure 3) ou le rail 212 (figure 7).

La face avant 505 présente, en position centrale, un nez 508 présentant une touche 509, permettant de faire prendre sélectivement à l'appareil 500, par appuis successifs sur la touche 509, l'une de trois configurations, respectivement une configuration de fonctionnement automatique, une configuration de fonctionnement forcé et une configuration d'arrêt.

En configuration de fonctionnement automatique, l'appareil électrique 500 permet ou non l'alimentation d'une charge suivant respectivement qu'un organe de commande est passant ou bloqué. En configuration de fonctionnement forcé, l'appareil électrique 500 permet en permanence l'alimentation de la charge. En configuration d'arrêt, l'appareil électrique 500 empêche en permanence l'alimentation de la charge.

La face supérieure 504 de l'appareil électrique 500 présente deux orifices d'introduction 510 et 511 donnant accès respectivement à une borne de raccordement 522 et à une borne de raccordement 520 (figure 10). L'orifice d'introduction 510 et la borne de raccordement 522 sont situés à gauche. L'orifice d'introduction 511 et la borne de raccordement 520 sont situés à droite.

La face inférieure 506 présente trois orifices d'introduction 516, 517 et 518, donnant accès respectivement à la borne de raccordement 513, 521 et 514 (figure 10). L'orifice d'introduction 516 et la borne de raccordement 513 sont situés à gauche. Les orifices d'introduction 517 et 518 et les bornes de raccordement 521 et 514 sont situés à droite.

Chacune des bornes de raccordement 513, 514, 520, 521 et 522 est prévue pour recevoir un tronçon d'extrémité dénudé d'un câble électrique.

La borne 522 est prévue pour être raccordée par un câble tel que 530 (figure 11) à un premier côté d'un organe de commande tel que 523, identique à l'organe de commande 123. La borne 520 est prévue pour être raccordée par un câble tel que 531 au second côté de cet organe de commande 523.

La borne 521 est prévue pour être raccordée par un câble tel que 525 (figure 11) à un premier côté d'une charge telle que 524, identique à la charge 124. Le second côté de cette charge 524 est prévu pour être raccordé par un câble tel que 526 à une borne de départ d'un disjoncteur tel que 600, identique au disjoncteur 300.

Les bornes de commande 513 et 514, situées en bas, sont prévues pour être raccordées à deux pôles du réseau de distribution de l'électricité, ici respectivement le neutre et la phase, par l'intermédiaire de ce disjoncteur tel que 600.

Ici, la borne 513 est prévue pour être raccordée par un câble tel que 527 à la borne de départ de ce disjoncteur tel que 600 qui est au pôle de neutre et la borne 514 est prévue pour être raccordée par un câble tel que 528 à la borne de départ de ce disjoncteur tel que 600 qui est au pôle de phase.

Le circuit électrique interne de l'appareil électrique 500, mis en œuvre par une carte électronique, est illustré de façon simplifiée sur la figure 10. Pour plus de détails, on pourra se reporter à la demande de brevet français 3 093 869 correspondant à la demande de brevet européen EP 3 709 333.

L'appareil électrique 500 comporte un étage de protection d'entrée 547, un étage de protection de sortie 540, un organe de pilotage 544, un organe de commutation 557, une transmission de pilotage entre l'organe de pilotage 544 et l'organe de commutation 557, mise en œuvre notamment par une unité logique 550 et par un actionneur électromagnétique 556, une première alimentation 552 en courant continu qui délivre une très basse tension de sécurité (ici de 3,3 V) et une deuxième alimentation 553 en courant continu qui délivre une très basse tension de sécurité (ici de 12V), un organe de communication radiofréquence 554 et un shunt 555.

L'organe de pilotage 544, l'organe de communication radiofréquence 554 et l'unité logique 550 sont alimentés par l'alimentation 552.

L'actionneur électromagnétique 556 est alimenté par l'alimentation 553.

L'unité logique 550 est reliée respectivement à l'organe de pilotage 544, à l'organe de communication radiofréquence 554, à l'actionneur électromagnétique 556 et au shunt 555.

L'étage de protection d'entrée 547 et l'étage de protection de sortie 540 sont agencés pour qu'en fonctionnement normal ils n'aient pas d'influence, ou en tout cas une influence minime, sur le cheminement de courant entre leurs entrées et leurs sorties. Pour plus de détails, on pourra se reporter à la demande de brevet français 3 093 869 correspondant à la demande de brevet européen EP 3 709 333.

Les bornes 513 et 514, l'étage de protection d'entrée 547, l'alimentation 553, l'alimentation 552, l'organe de pilotage 544, l'étage de protection de sortie 540 et les bornes 522 et 520 sont disposés les uns à la suite des autres.

Ainsi, les deux entrées de l'étage de protection 547 sont reliées respectivement à la borne 513 et à la borne 514, les deux entrées de l'alimentation 553 sont reliées respectivement à l'une et à l'autre sortie de l'étage de protection 547, les deux entrées de l'alimentation 552 sont reliées respectivement à l'une et à l'autre sortie de l'alimentation 553, les deux entrées de l'organe de pilotage 544 sont reliées respectivement à l'une et à l'autre sortie de l'alimentation 552, les deux entrées de l'étage de sortie 540 sont reliées respectivement à l'une et à l'autre sortie de l'organe de pilotage 544, la borne 522 est reliée à l'une des sorties de l'étage de protection 540 et la borne 520 est reliée l'autre sortie de l'étage de protection 540.

Le potentiel de référence du circuit électrique interne de l'appareil 500 est celui de la borne 514.

Ainsi, comme on le voit sur la figure 10, l'étage de protection d'entrée 547, l'alimentation 553, l'alimentation 552, l'organe de pilotage 544 et l'étage de protection de sortie 540 sont chacun configurés pour que son entrée et sa sortie correspondant au même pôle que la borne 514 soient au même potentiel.

Par conséquent, à l'exception de l'influence minime qu'est susceptible d'avoir l'étage de protection de sortie 540, la borne 520 est au même potentiel que la borne 514.

Ici, la sortie de l'alimentation 552 qui est au même potentiel que les bornes 514 et 520 est son pôle négatif et l'autre sortie de l'alimentation 552 est son pôle positif.

L'organe de pilotage 544 est configuré pour que la borne 520, à l'exception de l'influence minime qu'est susceptible d'avoir l'étage de protection de sortie 540, soit au même potentiel que le pôle positif de l'alimentation 552 lorsque les bornes 520 et 522 sont isolées électriquement l'une de l'autre extérieurement à l'appareil 500, et pour qu'il n'y ait pas de dégradation quand les bornes 520 et 522 sont mises au même potentiel, c'est-à-dire en court-circuit, extérieurement l'appareil 500.

Ainsi, l'organe de pilotage 544 est configuré pour appliquer aux bornes 520 et 522 la tension fournie par l'alimentation 552 lorsque les bornes 520 et 522 sont isolées électriquement l'une de l'autre extérieurement à l'appareil 500 et pour ne pas appliquer la tension fournie par l'alimentation 552 lorsque les bornes 520 et 522 sont mises au même potentiel extérieurement à l'appareil 500.

En pratique, l'organe de pilotage 544 comporte une résistance de limitation de courant 545 disposée entre son entrée et sa sortie reliées respectivement au pôle positif de l'alimentation 552 et à la borne 522.

La résistance 545 ayant une valeur relativement élevée, par exemple 10 kΩ, lors d'un court-circuit extérieur entre les bornes 520 et 522, la différence de potentiel entre les deux côtés de la résistance 545 est la tension fournie par l'alimentation 552 alors que le courant traversant la résistance 545 et circulant entre les bornes 522 et 520 est minime puisque la résistance a une valeur élevée, par exemple 0,33 mA dans le présent exemple où la tension fournie par l'alimentation 552 est de 3,3 V et la valeur de la résistance 545 est de 10 kΩ.

L'organe de pilotage 544 comporte en outre une résistance 546 disposée entre sa sortie reliée à la borne 522 et son point de connexion relié à l'unité logique 550.

Les deux résistances 545 et 546 servent à opérer la polarisation requise par l'unité logique 550.

Le potentiel présent sur le point de connexion de l'unité logique relié à l'organe de pilotage 544 est ainsi le potentiel présent sur la borne 522, ou en tout cas ce potentiel à une différence minime près due à l'étage de protection 540 et à la résistance 546.

Ainsi, par rapport au potentiel de référence du circuit électrique interne à l'appareil 500, correspondant au pôle négatif de la tension fournie par l'alimentation 552 qui alimente également l'unité logique 550, la tension au point de connexion de l'organe de pilotage 544 relié à l'unité logique 550 est de sensiblement 3,3 V lorsque les bornes 520 et 522 sont isolées électriquement l'une de l'autre extérieurement à l'appareil 500 et de 0 V lorsque les bornes 520 et 522 sont mises au même potentiel extérieurement à l'appareil 500.

L'organe de pilotage 544 fournit ainsi à l'unité logique 550 un signal logique formé par deux seuils de tension prédéterminés, ici sensiblement 3,3 V et sensiblement 0 V, représentant respectivement l'état désactivé et l'état activé de l'organe de pilotage 544.

Par conséquent, si les bornes 520 et 522 sont raccordées avec l'organe de commande, par exemple comme montré sur les figures 11 et 12, pour que quand l'organe de commande est à l'état bloqué les bornes 520 et 522 sont isolées électriquement l'une de l'autre extérieurement à l'appareil 500, et pour que quand l'organe de commande est à l'état passant les bornes 520 et 522 sont mises au même potentiel extérieurement à l'appareil 500, alors l'organe de pilotage 544 est à l'état désactivé lorsque l'organe de commande est à l'état bloqué (bornes 520 et 522 isolées électriquement l'une de l'autre extérieurement à l'appareil 500) et à l'état activé lorsque l'organe de commande est à l'état passant (bornes 520 et 522 mises au même potentiel extérieurement à l'appareil 500).

On observera que l'organe de pilotage 544 prend alors l'état désactivé et l'état activé exactement dans les mêmes conditions vis-à-vis de l'organe de pilotage que la bobine 125 du contacteur 100 et la bobine 225 du télérupteur 200.

Dans l'appareil 500, la transmission 128 entièrement mécanique du contacteur 100 ou 228 du télérupteur 200 est remplacée par une transmission de pilotage partiellement électronique, mise en œuvre notamment par l'unité logique 550 et par l'actionneur électromagnétique 556.

Ainsi, l'organe de commutation 557 est piloté par l'organe de pilotage 544 via la transmission de pilotage partiellement électronique pour que les transitions entre l'état bloqué et l'état passant de l'organe de commutation 557 suivent les transitions entre l'état désactivé et l'état activé de l'organe de pilotage 544.

L'organe de pilotage 544 comporte en outre un condensateur 5400 disposé entre ses deux sorties. Le condensateur 5400 est utile à la stabilité du signal fourni à l'unité logique 550.

L'actionneur électromagnétique 556 et l'organe de commutation 557 font ici partie d'un relais 551 dans lequel l'actionneur électromagnétique 556 est une bobine et l'organe de commutation 557 est une paire de contacts avec la transmission 568 entre la bobine 556 et la paire de contacts 557 qui est entièrement mécanique.

La paire de contacts 557 comporte un contact fixe ainsi qu'un contact mobile. L'actionneur électromagnétique 556 fait prendre à la paire de contacts 557 soit un état bloqué (contact mobile à l'écart du contact fixe), soit un état passant (contact mobile en appui sur le contact fixe).

Un premier côté de la paire de contacts 557 est relié à la borne 521. Le second côté de la paire de contacts est relié à la borne 514 via le shunt 555.

Plus précisément, un premier côté du shunt 555 est relié à la borne 514 et le second côté du shunt 555 est relié à l'entrée du relais 551 correspondant au second côté de la paire de contacts 557.

Comme indiqué ci-dessus, l'actionneur électromagnétique 556, ici une bobine, est alimenté par l'alimentation 553.

La liaison entre l'alimentation 553 et l'actionneur électromagnétique 556 comporte un commutateur électronique piloté 539, mis en œuvre par exemple avec un transistor et ses résistances de polarisation, le pilotage du commutateur électronique 539 s'effectuant par l'unité logique 550, à laquelle le commutateur électronique 539 est relié.

Lorsque le commutateur 539 est à l'état bloqué, la bobine 556 n'est pas alimentée et l'organe de commutation 557 est à l'état bloqué. Lorsque le commutateur 539 est à l'état passant, la bobine 556 est alimentée et l'organe de commutation est à l'état passant.

L'appareil 500 étant un contacteur, l'unité logique 550 est programmée pour que quand son point de connexion relié à l'organe de pilotage 544 reçoit le signal logique que l'organe de pilotage 544 est à l'état désactivé alors son point de connexion relié au commutateur 539 émet le signal logique mettant le commutateur 539 à l'état bloqué ; et pour que quand son point de connexion relié à l'organe de pilotage 544 reçoit le signal logique que l'organe de pilotage 544 est à l'état activé alors son point de connexion relié au commutateur 539 émet le signal logique mettant le commutateur 539 à l'état passant.

Ainsi, l'organe de commutation 557 est piloté par l'organe de pilotage 544 via la transmission de pilotage partiellement électronique comportant l'unité logique 550 pour que les transitions entre l'état bloqué et l'état passant de l'organe de commutation 557 suivent les transitions entre l'état désactivé et l'état activé de l'organe de pilotage 544.

L'unité logique 550 est également reliée au shunt 555, ici par deux pistes conductrices dédiées reliant respectivement l'entrée du shunt 555 à un point de connexion de l'unité logique 550 et la sortie du shunt 555 à un autre point de connexion de l'unité logique 550.

Cela permet à l'unité logique 550 de connaitre la chute de tension dans le shunt 555. La valeur de la résistance du shunt 555 étant connue, l'unité logique 550 peut déduire de cette chute de tension l'intensité du courant circulant dans le shunt 555 et donc entre les bornes 514 et 521, et par conséquent dans la charge à laquelle ces bornes sont reliées.

Les deux pistes conductrices dédiées reliant le shunt 555 à l'unité logique 550 permettent d'éviter de prendre en considération une chute de tension qui ne serait pas due au shunt, afin de connaitre l'intensité du courant avec une bonne précision.

Dans une variante non illustrée, seul le côté du shunt opposé à celui qui est relié à la borne 514 est relié à l'unité logique 550 et celle-ci détermine l'intensité à partir de la chute de tension entre le potentiel de référence (celui de la borne 514) et le point de connexion auquel est relié le côté du shunt opposé à celui qui est relié à la borne 514.

L'intensité déterminée par l'unité logique 550 peut être communiquée extérieurement à l'appareil électrique 500 par l'organe de communication radiofréquence 554.

Cela permet à un utilisateur, par l'intermédiaire d'une application mobile par exemple, de prendre connaissance en temps réel de la consommation électrique de la charge associée à l'appareil électrique 500.

L'organe de communication radiofréquence 554, relié à l'unité logique 550, permet par ailleurs le contrôle à distance, par l'intermédiaire d'une application mobile par exemple, de l'appareil électrique 500, c'est-à-dire de lui faire prendre l'une des configurations susmentionnées (fonctionnement automatique, fonctionnement forcé et arrêt).

La touche 509 est également reliée à l'unité logique 550, afin que les appuis successifs sur la touche 509 fassent prendre à l'appareil 500 l'une de ces configurations.

La carte électronique de l'appareil électrique 500 est configurée pour protéger elle-même son circuit interne. Ainsi, il n'est pas nécessaire de raccorder ce circuit à un disjoncteur dédié tel que le disjoncteur 400 décrit ci-dessus.

En effet, comme indiqué ci-dessus, le circuit interne de l'appareil 500 mis en œuvre par la carte électronique comporte un étage de protection d'entrée 547, représenté de façon générale sur la figure 10.

L'étage de protection d'entrée 547 comporte un composant 549 de protection contre les surintensités, ici une thermistance à coefficient positif et un composant 548 de protection contre les surtensions, ici une varistance.

Dans l'étage de protection d'entrée 547 le composant 549 de protection contre les surintensités est disposé entre son entrée et sa sortie reliées respectivement à la borne 513 et à l'entrée correspondante de l'alimentation 553. Le composant 548 de protection contre les surtensions est disposé entre les deux sorties de l'étage de protection d'entrée 547.

La résistance de la thermistance 549 augmente en fonction de la température, ce qui permet la protection du circuit contre les courts-circuits, notamment en cas de défaut de la bobine 556. La varistance 548 permet l'absorption des chocs de tension assez importants, ce qui permet une protection du circuit notamment contre les chocs dus à la foudre.

Comme indiqué ci-dessus, le circuit interne de l'appareil 500 comporte un étage de protection de sortie 540, représenté de façon générale sur la figure 10. L'étage de protection de sortie 540 est relié par un premier côté à l'organe de pilotage 544 ainsi qu'à la borne 514 et par un deuxième côté aux bornes 520 et 522.

L'étage de protection de sortie 540 comporte un composant 543 de protection contre les surtensions, ici une diode Zener bipolaire, un composant 541 de protection contre les surintensités, ici une thermistance à coefficient positif, et un autre composant 542 de protection contre les surintensités, ici une thermistance à coefficient positif.

Dans l'étage de protection de sortie 540 le composant 541 de protection contre les surintensités est disposé entre sa sortie et son entrée reliées respectivement à la borne 520 et à la sortie correspondante de l'organe de pilotage 544 ; le composant 542 de protection contre les surintensités est disposé entre sa sortie et son entrée reliées respectivement à la borne 522 et à la sortie correspondante de l'organe de pilotage ; et le composant 543 de protection contre les surtensions est disposé entre les deux entrées de l'étage de protection de sortie 540.

L'étage de protection de sortie 540 sert à protéger le circuit interne de l'appareil 500 contre les erreurs de câblage, par exemple l'application de la tension du réseau entre les bornes 520 et 522 par raccordement de l'une de ces bornes au pôle de neutre et de l'autre borne au pôle de phase.

Pour plus de détails sur l'agencement de l'étage de protection d'entrée 547 et de l'étage de protection de sortie 540, on pourra se reporter à la demande de brevet français 3 093 869 correspondant à la demande de brevet européen EP 3 709 333.

Du fait de la protection offerte par l'étage de protection d'entrée 547, dans le circuit illustré sur la figure 11, où l'appareil électrique 500 est un contacteur, seul est prévu un disjoncteur 600 identique au disjoncteur 300 décrit ci-dessus.

On notera que dans ce circuit la borne 522 est raccordée par un premier câble 530 à un premier côté de l'organe de commande 523 et par un second câble 531 au second côté de l'organe de commande 523 ; et que les bornes 513, 521 et 514 sont reliées comme expliqué ci-dessus, par des câbles, au disjoncteur 600 et à la charge 524.

Lorsque l'organe 523 est à l'état bloqué, la charge 524 n'est pas alimentée ; et lorsque l'organe de commande 523 est à l'état passant, la charge 524 est alimentée.

Dans le deuxième mode de réalisation illustré sur la figure 12, l'appareil 500 est un télérupteur.

Comme indiqué ci-dessus, ce deuxième mode de réalisation est identique au premier mode de réalisation sauf que l'unité logique 550 est programmée différemment : alors que dans le premier mode de réalisation (contacteur) l'unité logique 550 est programmée pour que les transitions de l'organe de commutation 557 entre l'état bloqué et l'état passant suivent les transitions entre l'état bloqué et l'état passant de l'organe de commande tel que 523, dans le télérupteur l'unité logique 550 est programmée pour que les transitions de l'organe de commutation 557 entre l'état bloqué et l'état passant suivent uniquement les transitions de l'état désactivé à l'état activé de l'organe de pilotage 544, et donc uniquement les transitions de l'état bloqué à l'état passant de l'organe de commande tel que 523.

On voit que le circuit montré sur la figure 12 est identique à celui montré sur la figure 11, sauf que l'appareil électrique 500 est un télérupteur (et pas un contacteur) et que l'organe de commande 523 est identique à l'organe de commande 223 décrit ci-dessus (et pas à l'organe de commande 123).

Il est également connu de faire coopérer l'appareil 500 via son organe de communication radiofréquence 554 avec une station de base mettant en œuvre un réseau radiofréquence dont les participants sont identifiés par une adresse qui leur est propre, cette station de base étant mise en œuvre sous la forme d'un appareil électrique modulaire.

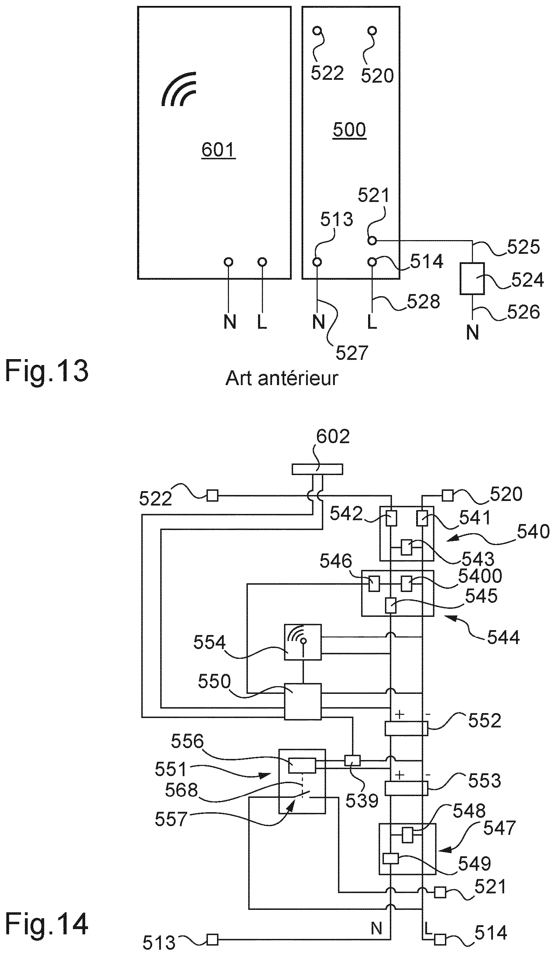

Cela est illustré sur les dessins annexés, dans lesquels : - La figure 13 est une représentation schématique semblable à la figure 11 ou à la figure 12 mais où le disjoncteur 600, l'organe de commande 523 et les câbles 530 et 531 le reliant à l'appareil 500 ne sont pas illustrés, alors qu'est illustré un appareil électrique 601 au format modulaire qui est une station de base mettant en œuvre un réseau radiofréquence dont les participants sont identifiés par une adresse qui leur est propre.

Conformément au format modulaire, l'appareil station de base 601 est configuré pour appartenir à une rangée d'appareils modulaires disposés côte-à-côte en étant fixés par l'arrière, de même que l'appareil électrique 500 et le disjoncteur 600, sur un rail de support normalisé à profil en Ω, tel que le rail 112 (figure 3) ou le rail 212 (figure 7), disposé horizontalement, faisant partie d'une enveloppe de protection telle qu'une armoire, un boitier ou un coffret électrique.

L'appareil 500 est configuré pour coopérer via son organe de communication radiofréquence 554 avec l'appareil station de base 601 qui est configuré pour mettre en œuvre un réseau radiofréquence dont les participants sont identifiés par une adresse qui leur est propre.

Ce réseau radiofréquence est du type réseau à dimension personnelle sans fil WPAN (Wireless Personal Area Network), ici conforme aux spécifications ZigBee.

L'appareil station de base 601 connu est plus précisément une passerelle entre un réseau radiofréquence WPAN et un réseau IP, le réseau WPAN étant aux spécifications ZigBee tandis que l'accès au réseau IP s'effectue par wifi.

L'appareil station de base 601 est configuré pour communiquer avec une application mobile soit directement par wifi si l'appareil mobile fait partie du même réseau wifi que l'appareil station de base 601 soit par l'intermédiaire d'un serveur web auquel accèdent l'appareil station de base 601 et l'appareil mobile sur lequel est installé l'application.

Cela permet à l'application mobile de communiquer avec l'appareil 500 contacteur ou télérupteur, notamment, comme indiqué ci-dessus, pour prendre connaissance en temps réel de la consommation électrique de la charge associée à l'appareil électrique 500 ou pour contrôler à distance l'appareil 500 c'est-à-dire de lui faire prendre l'une des configurations susmentionnées (fonctionnement automatique, fonctionnement forcé et arrêt).

L'appareil station de base 601 est configuré pour mettre en œuvre un réseau radiofréquence avec d'autres participants que des appareils électriques 500, notamment des prises, des interrupteurs et des compteurs d'énergie.

### Exposé de l'invention

L'invention vise à intégrer de façon simple, commode et économique dans un réseau radiofréquence un contacteur de puissance afin de pouvoir piloter l'alimentation d'une charge et connaitre sa consommation comme avec l'appareil électrique 500, mais pour des charges dans lesquelles circule une intensité de courant plus élevée que l'intensité de courant qui peut traverser l'appareil électrique 500.

L'invention propose à cet effet un appareil électrique pour laisser ou non une source de courant alternatif pour une installation électrique domestique ou tertiaire alimenter une charge, en fonction d'ordres reçus par ledit appareil via un réseau radiofréquence, ledit appareil étant configuré pour faire partie dudit réseau radiofréquence, les participants dudit réseau radiofréquence étant identifiés par une adresse qui leur est propre, ledit appareil comportant :
- une borne d'arrivée configurée pour être raccordée à un pôle de ladite source de courant alternatif et une autre borne d'arrivée configurée pour être raccordée à un autre pôle de ladite source de courant alternatif ;
- une borne de départ configurée pour être raccordée à un point d'activation de ladite charge ;
- un organe de communication radiofréquence via ledit réseau radiofréquence ; et
- un organe de commutation relié à ladite borne de départ et à une borne conjuguée, prenant soit un état bloqué où il interdit le passage de courant entre la borne conjuguée et la borne de départ soit un état passant où il autorise le passage de courant entre la borne conjuguée et la borne de départ, ledit organe de commutation étant piloté par ledit organe de communication radiofréquence via une transmission de pilotage comportant une unité logique reliée audit organe de communication radiofréquence ainsi qu'un actionneur électromagnétique dudit organe de commutation, relié à ladite unité logique; ladite transmission de pilotage étant configurée pour que les transitions entre l'état bloqué et l'état passant de l'organe de commutation suivent des ordres reçus par ledit organe de communication radiofréquence ;

ladite unité logique étant configurée pour déterminer une intensité de courant à partir d'un signal fourni par un organe de mesure de courant et pour communiquer extérieurement audit appareil, via ledit organe de communication radiofréquence, l'intensité de courant ainsi déterminée ;
lequel appareil est caractérisé en ce qu'il comporte un bornier configuré pour être raccordé par des câbles à un organe de mesure de courant externe audit appareil ; ledit bornier étant relié à ladite unité logique; ladite unité logique étant configurée pour déterminer ladite intensité de courant à partir du signal présent audit bornier ;
grâce à quoi lorsque ledit point d'activation de ladite charge est une borne de commande d'un contacteur de puissance distinct dudit appareil avec les bornes de départ dudit contacteur de puissance raccordées par des câbles à ladite charge et avec ledit organe de mesure de courant qui est disposé sur un dit câble raccordant ladite charge à une dite borne de départ dudit contacteur de puissance, l'intensité de courant communiquée extérieurement par ledit appareil via ledit organe de communication radiofréquence est l'intensité consommée par ladite charge.

Pour le réseau radiofréquence, tout se passe comme si c'était l'appareil selon l'invention qui alimentait directement la charge et faisait intérieurement la mesure du courant le traversant, avec en particulier sa seule adresse de réseau radiofréquence qui est utilisée aussi bien pour commander l'alimentation de la charge que pour connaitre la consommation de la charge.

L'intégration du contacteur de puissance dans le réseau radiofréquence est ainsi particulièrement simple, commode et économique puisqu'il n'est pas besoin de modifier le contacteur de puissance mais simplement de raccorder une de ses bornes de commande à l'appareil selon l'invention et de placer l'organe de mesure de courant raccordé au bornier de l'appareil selon l'invention sur l'un des câbles raccordant le contacteur de puissance à la charge.

Selon des caractéristiques avantageuses :
- ladite unité logique unité logique est configurée pour que la seule intensité de courant qu'elle détermine et communique extérieurement audit appareil via ledit organe de communication radiofréquence est celle déterminée à partir dudit signal présent audit bornier;
- le signal présent audit bornier est une différence de potentiel entre deux points de connexion dudit bornier, ladite source de courant alternatif étant monophasée ;
- ledit signal présent audit bornier est une pluralité différences de potentiel entre deux points de connexion dudit bornier, ladite source de courant alternatif étant triphasée ;
- ladite borne conjuguée est ladite borne d'arrivée ; et/ou
- ladite borne conjuguée est une borne supplémentaire distincte de ladite borne d'arrivée, grâce à quoi ni ladite borne de départ ni ladite borne conjuguée n'est portée au potentiel de l'un des pôles de ladite source de courant alternatif.

L'invention vise également, sous un deuxième aspect, un circuit électrique comportant :
- un appareil tel qu'exposé ci-dessus ;
- une charge que ledit appareil laisse ou non être alimentée par une source de courant alternatif en fonction d'ordres reçus par radiofréquence par ledit appareil via ledit réseau radiofréquence ;
- un contacteur de puissance, distinct dudit appareil, comportant des bornes de départ raccordées par des câbles à ladite charge et une borne de commande raccordée par un câble à ladite borne de départ dudit appareil, ladite borne de commande dudit contacteur formant ledit point d'activation de ladite charge ; et
- un organe de mesure de courant disposé sur un dit câble raccordant ladite charge à l'une desdites bornes de départ dudit contacteur de puissance, l'intensité de courant communiquée extérieurement par ledit appareil via ledit organe de communication radiofréquence étant l'intensité consommée par ladite charge.

Selon des caractéristiques avantageuses :
- ledit circuit comporte un appareil station de base pour mettre en œuvre ledit réseau radiofréquence et former passerelle vers un réseau IP ;
- ledit organe de mesure de courant est une boucle ampèremétrique ; et/ou
- ledit appareil pour laisser ou non ladite source de courant alternatif alimenter ladite charge et ledit appareil station de base sont au format modulaire.

### Brève description des dessins

L'exposé de l'invention sera maintenant poursuivi par la description détaillée d'exemples de réalisation, donnée ci-après à titre illustratif et non limitatif, en référence aux dessins annexés, sur lesquels :
- Les figures 1 à 4, décrites ci-dessus, illustrent un contacteur connu et la portion d'installation électrique qui lui est associée ;
- Les figures 5 à 8, décrites ci-dessus, illustrent un télérupteur connu et la portion d'installation électrique qui lui est associée ;
- Les figures 9 à 12, décrites ci-dessus, illustrent un autre contacteur et un autre télérupteur connus et la portion d'installation électrique qui leur est associée ;
- La figure 13, décrite ci-dessus, illustre cet autre contacteur ou télérupteur connu ainsi qu'un appareil station de base au format modulaire avec lequel il communique dans le cadre d'un réseau radiofréquence dont les participants sont identifiés par une adresse qui leur est propre ;
- La figure 14 est une représentation semblable à la figure 10 mais où le circuit interne représenté de façon très schématique est celui l'appareil contacteur ou télérupteur selon l'invention ;

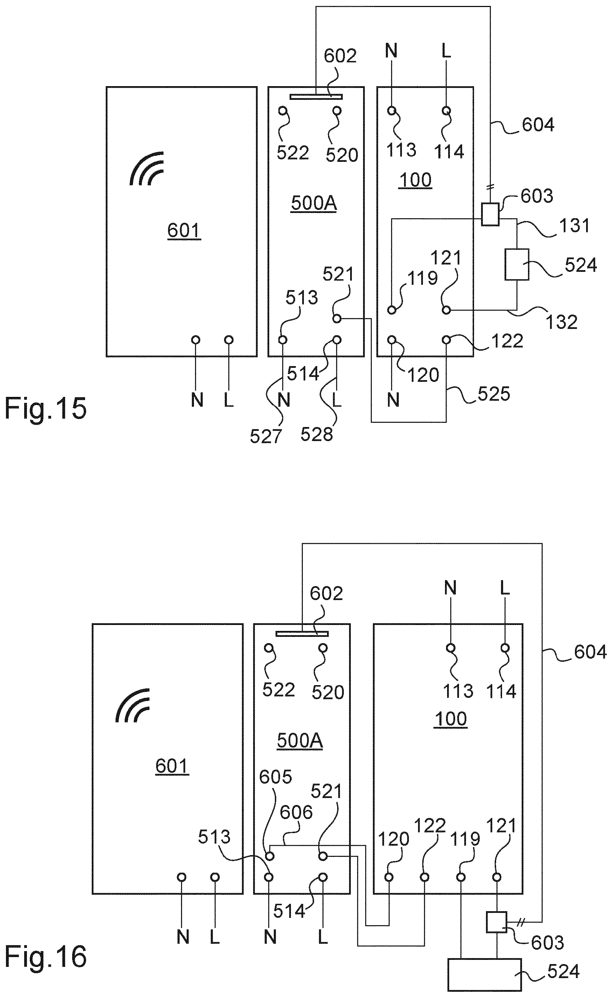

- La figure 15 est une vue semblable à la figure 13, mais avec l'appareil contacteur ou télérupteur selon l'invention associé à un contacteur de puissance pour alimenter la charge et à un organe externe de mesure du courant consommé par la charge ;
- La figure 16 est une vue semblable à la figure 15 mais pour une variante du contacteur de puissance et une variante correspondante de l'appareil contacteur ou télérupteur selon l'invention ;

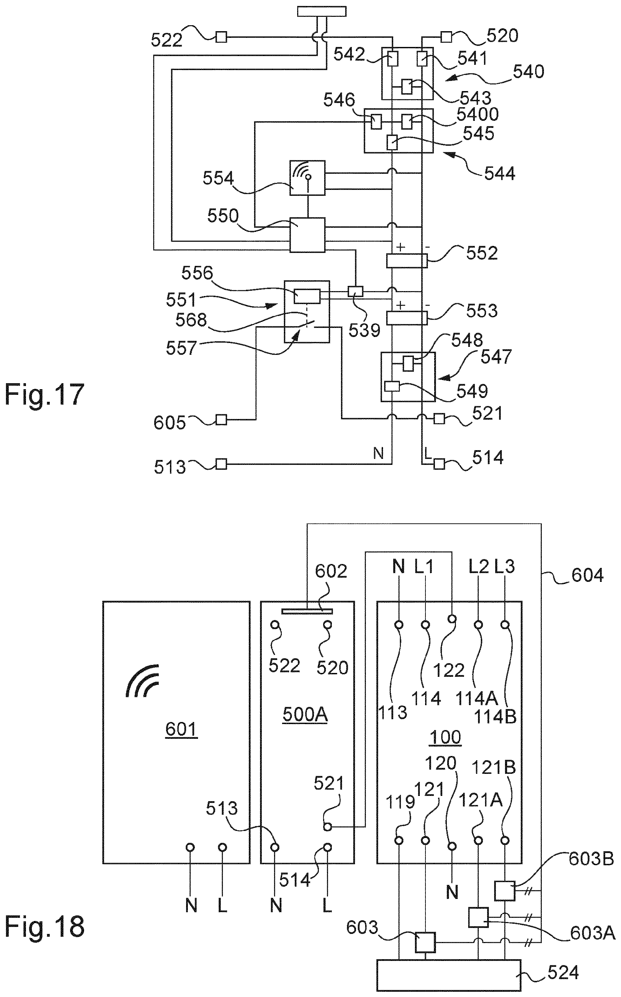

- La figure 17 est une vue semblable à la figure 14 mais où le circuit interne représenté de façon très schématique est celui de l'appareil contacteur ou télérupteur selon l'invention montré sur la figure 16 ;
- La figure 18 est une vue semblable à la figure 15 mais où le contacteur de puissance et la charge sont triphasés ; et

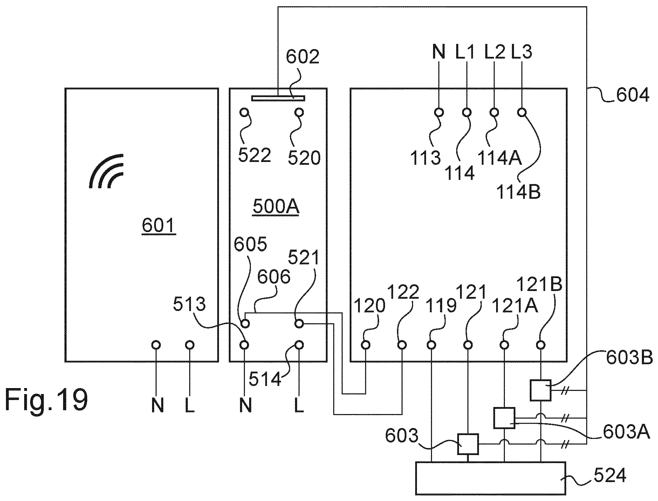

- La figure 19 est semblable à la figure 18 mais pour la variante de l'appareil contacteur ou télérupteur selon l'invention montrée sur les figures 16 et 17 et une variante du contacteur de puissance triphasé.

### Description détaillée

Pour simplifier, pour l'appareil électrique 500A selon l'invention montré sur les figures 14 et 15 on a utilisé les mêmes références numériques que pour l'appareil 500 connu.

L'appareil électrique 500A montré sur les figures 14 et 15 est semblable à l'appareil électrique 500 connu si ce n'est qu'il comporte un bornier 602 relié à l'unité logique 550 et que le shunt 555 est supprimé.

Ainsi, de même que dans l'appareil électrique 500, le premier côté de la paire de contacts 557 est relié à la borne 521 mais dans l'appareil 500A le second côté de la paire de contacts est relié directement à la borne 514 et non via le shunt 555.

Dans l'appareil 500A, l'unité logique 550 est reliée au bornier 602, ici par deux pistes conductrices dédiées reliant respectivement un point de connexion du bornier 602 à un point de connexion de l'unité logique 550 et un autre point de connexion du bornier 602 à un autre point de connexion de l'unité logique 550.

Cela permet à l'unité logique 550 de connaitre la différence de potentiel entre le point de connexion et l'autre point de connexion du bornier 602.

Le bornier 602 est configuré pour être raccordé par des câbles à un organe de mesure de courant externe à l'appareil 500A, tel que l'organe externe 603 de mesure de courant montré sur la figure 15.

Cet organe externe est configuré pour fournir au bornier 602 un signal, ici la différence de potentiel entre le point de connexion et l'autre point de connexion du bornier 602, qui est représentatif de l'intensité de courant circulant dans un câble externe à l'appareil 500A sur lequel est disposé l'organe de mesure, par exemple le câble 131 montré sur la figure 15.

L'unité logique 550 est configurée pour déduire de la différence de potentiel entre le point de connexion et l'autre point de connexion du bornier 602 l'intensité du courant circulant dans le câble externe à l'appareil 500A sur lequel est disposé l'organe de mesure.

L'unité logique 550 peut ainsi déterminer l'intensité du courant circulant dans une charge 524 dont l'appareil 500A commande l'alimentation alors que le courant qui circule dans la charge 524 ne circule pas dans l'appareil 500A.

Cela est par exemple le cas dans le circuit électrique montré sur la figure 15, qui fait partie d'une installation électrique domestique ou tertiaire.

Ce circuit comporte un contacteur 100 agencé comme décrit ci-dessus à l'appui des figures 1 à 4.

Ici, le contacteur 100 sert de contacteur de puissance capable d'être traversé par un courant de plus grande intensité que celle qui peut traverser l'appareil 500A, par exemple une intensité de 34 A ou de 50 A alors que l'intensité maximale que peut traverser l'appareil 500A est par exemple de 20 A.

De même que pour le circuit électrique illustré sur les figures 3 et 4, dans le circuit électrique illustré sur la figure 15 la charge 124 est raccordée d'un premier côté par un premier câble 131 à la borne de raccordement 119 et du second côté par un second câble 132 à la borne de raccordement 121 ; et les bornes de raccordement 113 et 114 du contacteur 100 sont prévues pour être raccordées par des câbles aux bornes de départ d'un disjoncteur (non illustré sur la figure 15) tel que le disjoncteur 300 qui sert à protéger le circuit comportant la charge 124, avec ici la borne 113 qui est raccordée à la borne de départ de ce disjoncteur qui est au pôle de neutre tandis que la borne 114 est reliée à la borne de départ de ce disjoncteur qui est au pôle de phase.

De même que pour le circuit électrique illustré sur les figures 3 et 4, dans le circuit électrique illustré sur la figure 15 il est prévu un autre disjoncteur (non illustré sur la figure 15) tel que le disjoncteur 400 pour protéger le circuit comportant la bobine 125 (figure 2) qui se trouve entre les bornes 120 et 122, avec ici la borne 120 qui est raccordée par un câble à la borne de départ de ce disjoncteur qui est au pôle de neutre.

Contrairement au circuit électrique illustré sur les figures 3 et 4, dans le circuit électrique illustré sur la figure 15, la borne 122 du contacteur 100 n'est pas raccordée par un câble à l'un des côtés d'un organe de commande tel que 123 ; c'est en fait à la borne de raccordement 521 de l'appareil 500A qu'est raccordée la borne 122, par le câble 525.

La borne de raccordement 514 de l'appareil 500A est reliée par le câble 528 à la borne de départ du disjoncteur tel que 400 qui est au pôle de phase tandis que la borne 513 de l'appareil 500A est reliée par le câble 527 à la borne de départ du disjoncteur tel que 400 qui est au pôle de neutre.

D'une façon générale, dans le circuit illustré sur la figure 15, l'organe de commutation 557 de l'appareil 500A joue vis-à-vis du contacteur 100 le même rôle que l'organe de commande 123 du circuit illustré sur les figures 3 et 4.

On voit que quand l'organe de commutation 557 est à l'état passant, la tension du réseau apparait entre les bornes 120 et 122, la bobine 125 (figure 2) est activée, les paires de contacts 126 et 127 (figure 2) sont à l'état passant et la charge 524 est alimentée. Quand l'organe de commutation 557 est à l'état bloqué, il n'y a pas de tension entre les bornes 120 et 122, la bobine 125 (figure 2) est désactivée, les paires de contacts 126 et 127 (figure 2) sont à l'état bloqué et la charge 524 n'est pas alimentée.

La borne de raccordement 122 du contacteur 100 forme un point d'activation de la charge 524 par l'appareil 500A, tout comme le côté de la charge 524 auquel est relié la borne 521 dans le circuit électrique illustré sur la figure 13. Pour simplifier on a gardé la référence numérique 525 pour le câble électrique reliant la borne 521 au point d'activation de la charge 524 que forme la borne 122 du contacteur 100.

L'état activé ou désactivé de l'organe de commutation 557 est pris comme décrit ci-dessus, en fonction des états passant ou bloqué pris par l'organe de commande 523 raccordé aux bornes 520 et 522 si l'appareil 500A est en configuration de fonctionnement automatique. Si l'appareil 500A est en configuration de fonctionnement forcé, l'organe de commutation 557 est dans l'état activé. Si l'appareil 500A est en configuration d'arrêt, l'organe de commutation 557 est dans l'état désactivé.

Comme indiqué ci-dessus, l'organe de communication radiofréquence 554, relié à l'unité logique 550, permet le contrôle à distance de l'appareil électrique 500A, c'est-à-dire de lui faire prendre l'une des configurations susmentionnées (fonctionnement automatique, fonctionnement forcé et arrêt).

On observera qu'il est possible d'utiliser l'appareil 500A sans raccorder les bornes 520 et 522 à un organe de commande 523, en lui faisant prendre par contrôle à distance, via l'organe de communication radiofréquence 554, la configuration de fonctionnement forcé ou la configuration d'arrêt.

On observera que le courant qui circule dans l'organe de commutation 557 de l'appareil 500A est le courant d'activation de la bobine 125 (figure 2).

Si l'on avait utilisé l'appareil 500 à la place de l'appareil 500A, le shunt 555 aurait permis de connaître le courant d'activation de bobine 125 (figure 2) et le non le courant qui circule dans la charge 524.

Comme indiqué ci-dessus, l'appareil électrique 500A montré sur les figures 14 et 15 est semblable à l'appareil électrique 500 connu si ce n'est que le shunt 555 est supprimé et que l'appareil 500A comporte un bornier 602 relié à l'unité logique 550, qui peut ainsi connaitre la différence de potentiel entre le point de connexion et l'autre point de connexion du bornier 602, l'unité logique 550 étant configurée pour déduire de cette différence de potentiel l'intensité du courant circulant dans le câble externe à l'appareil 500A sur lequel est disposé l'organe de mesure raccordé au bornier 602.

Dans le circuit illustré sur la figure 15, l'organe de mesure 603 est disposé sur le câble 131 raccordant la borne 119 à la charge 524, et donc sur un câble dans lequel circule le courant traversant la charge 524.

L'unité logique 550 peut ainsi déterminer l'intensité du courant circulant dans la charge 524 dont l'appareil 500A commande l'alimentation alors que le courant qui circule dans la charge 524 ne circule pas dans l'appareil 500A.

L'appareil 500A peut ainsi s'intégrer dans un réseau d'appareils connectés exactement de la même façon que l'appareil 500, c'est-à-dire avec une seule et même adresse réseau à la fois pour la commande de l'alimentation de la charge 524 et pour le suivi de la consommation de la charge 524.

On observera également que le risque de suivre par erreur la consommation de courant du contacteur de puissance 100 plutôt que la consommation de la charge 524 est éliminé, étant donné que l'appareil 500A ne mesure pas l'intensité du courant qui le traverse.

Dans l'exemple illustré, l'organe de mesure de courant 603 est une boucle ampèremétrique (tore et enroulement) qui entoure le câble où circule le courant dont l'intensité doit être mesurée, ici le câble 131. Chacune des deux extrémités de l'enroulement de la boucle de mesure de courant est relié à un respectifs de deux câbles que comporte le cordon 604 qui raccorde l'organe de mesure 603 au bornier 602.

Chacun des deux câbles du cordon 604 est relié à un point de connexion respectif du bornier 602.

La différence de potentiel entre les deux points de connexion du bornier 602 correspond donc à la différence de potentiel entre les deux extrémités de l'enroulement de la boucle ampèremétrique qui forme l'organe de mesure 603.

Cette différence de potentiel est donc représentative de l'intensité du courant circulant dans le câble 131 et donc dans la charge 524.

Si besoin, une interface de mise en forme de cette différence de potentiel est prévue, par exemple dans le bornier 602 entre l'arrivée des câbles du cordon 604 et les pistes reliant le bornier 602 à l'unité logique 550, afin que la tension appliquée aux points de connexion correspondants de l'unité logique 550 soit conforme à ses spécifications.

Le cordon 604 est ici raccordé au bornier 602 par un connecteur enfichable. En variante, le cordon 604 est raccordé de façon différente au bornier 602, par exemple grâce à des bornes à vis.

Le circuit illustré sur la figure 16 est semblable à celui illustré sur la figure 15 si ce n'est que le contacteur de puissance 100 a un agencement interne différent, avec un équivalent électronique de la bobine 125 qui est alimenté intérieurement au contacteur de puissance 100 par de l'énergie provenant du réseau auquel sont raccordées les bornes 113 et 114. En conséquences, les bornes 120 et 122 doivent être libres de potentiel, c'est-à-dire qu'aucune d'entre elles ne doit être portée, extérieurement au contacteur 100, au potentiel de l'un des pôles d'une source de courant. Il faut au contraire relier les bornes 120 et 122 à un organe de commutation dont les deux côtés sont libres de potentiel. Lorsque cet organe de commutation est passant, les bornes 119 et 121 sont reliées respectivement à la borne 113 et à la borne 114 de sorte que la charge 524 est alimentée ; et lorsque cet organe de commutation est bloqué, les bornes 119 et 121 ne sont pas reliées aux bornes 113 et 114 de sorte que la charge 524 n'est pas alimentée.

Afin de pouvoir coopérer avec un tel contacteur de puissance 100, l'appareil 500A montré sur les figures 16 et 17 comporte une borne de raccordement supplémentaire 605 tandis que le côté de l'organe de commutation 557 opposé à celui relié à la borne 521 n'est pas relié à la borne 514 mais à la borne supplémentaire 605.

Les deux bornes de raccordement 521 et 605 auxquelles sont reliés les côtés respectifs de l'organe de commutation 557 sont ainsi libres de potentiel.

Dans le circuit montré sur la figure 16, la borne 120 du contacteur 100 n'est pas raccordée par un câble à la borne de départ au pôle de neutre du disjoncteur tel que 400, mais est raccordée par un câble 606 à la borne 605 de l'appareil 500A.

On observera que dans le circuit montré sur la figure 16, la borne de raccordement 120 du contacteur 100 forme un point d'activation de la charge 524 par l'appareil 500A, de même que la borne de raccordement 122 forme un tel point d'activation, ainsi qu'expliqué ci-dessus.

Le circuit illustré sur la figure 18 est semblable à celui illustré sur la figure 15 si ce n'est que le contacteur 100 et la charge 524 sont triphasés.

Le disjoncteur non illustré tel que 300 (figures 3 et 4) est donc lui aussi triphasé. La borne 114 du contacteur 100 du circuit illustré sur la figure 18 est raccordée par un câble à la borne de départ au pôle de phase 1 du disjoncteur tel que 300, une borne supplémentaire 114A est raccordée par un câble à la borne de départ au pôle de phase 2 du disjoncteur tel que 300, et une borne supplémentaire 114B est raccordée par un câble à la borne de départ au pôle de phase 3 du disjoncteur tel que 300.

Le circuit interne du contacteur 100 du circuit illustré sur la figure 18 est semblable à celui illustré sur la figure 2 mais avec deux paires de contact supplémentaires commandées par la bobine 125 afin que quand la bobine 125 est activée, on ait également la borne 114A qui est reliée à une borne supplémentaire 121A et la borne 114B qui est reliée à une borne supplémentaire 121B.

La charge 524 est raccordée par des câbles aux bornes 119, 121, 121A et 121B.

En plus de l'organe de mesure de courant 603 placé sur le câble raccordant la borne 121 à la charge 524, un organe de mesure de courant supplémentaire 603A est placé sur le câble raccordant la borne 121A à la charge 524 et un autre organe de mesure de courant supplémentaire 603B est placé sur le câble raccordant la borne 121B à la charge 524.

Les deux câbles des trois organes 603, 603A et 603B se rejoignent et le cordon 604 du circuit illustré sur la figure 18 comporte donc six câbles.

Le bornier 602 de l'appareil 500A du circuit illustré sur la figure 18 comporte donc six points de connexion, reliés chacun par une piste conductrice individuelle à l'unité logique 550, qui est configurée pour déduire le courant consommé par la charge 524 à partir des trois différences de potentiel fournies par les organes de mesure 603, 603A et 603B.

Le circuit illustré sur la figure 19 est semblable à celui illustré sur la figure 18 si ce n'est que le contacteur de puissance 100 de ce circuit, tout comme le contacteur de puissance 100 illustré sur la figure 16, a des bornes 120 et 122 qui doivent être libres de potentiel.

L'appareil 500A du circuit illustré sur la figure 19 est donc semblable à l'appareil 500A du circuit illustré sur la figure 18 mais, tout comme l'appareil 500A du circuit illustré sur la figure 16, il comporte une borne de raccordement supplémentaire 605 tandis que le côté de l'organe de commutation 557 opposé à celui relié à la borne 521 n'est pas relié à la borne 514 mais à une borne supplémentaire 605.

Dans le circuit montré sur la figure 19, la borne 120 du contacteur 100 n'est pas raccordée par un câble à la borne de départ au pôle de neutre du disjoncteur tel que 400, mais est raccordée par un câble 606 à la borne 605 de l'appareil 500A.

Dans des variantes non illustrées :
- l'appareil électrique 500A coopère directement (et non par l'intermédiaire d'un contacteur de puissance tel que 100) avec la charge telle que 524, comme le circuit montré sur la figure 13, le point d'activation de la charge 524 auquel est raccordé la borne de départ 521 étant l'un des côtés de la charge 524, mais avec l'organe externe de mesure de courant tel que 603 qui est placé sur le câble 525 ou 526 ;
- les mesures décrites ci-dessus pour que ce soit une tension de sécurité qui soit appliquée à l'organe de commande tel que 523 sont absentes de l'appareil tel que 500A, l'agencement interne de l'appareil selon cette variante étant, en ce qui concerne la coopération avec l'organe de commande, semblable à l'agencement interne montré sur la figure 2 ou sur la figure 6 ;
- l'organe de mesure de courant tel que 603, 603A et 603B est remplacé par un autre organe de mesure du courant, par exemple un shunt ou une sonde à effet Hall ;
- l'appareil station de base 601 est à un format autre que modulaire ;
- l'appareil tel que 500A est à un format autre que modulaire
- le réseau WPAN mis en œuvre par l'appareil station de base 601 est à d'autres spécifications que ZigBee, par exemple BLE (Bluetooth Low Energy) ;
- l'accès de l'appareil station de base 601 au réseau IP se fait autrement que par wifi, par exemple par une liaison filaire Ethernet ; et/ou
- le réseau radiofréquence dont les participants sont identifiés par adresse unique est autre qu'un réseau WPAN avec une station de base dédiée, par exemple l'appareil 500A est configuré pour faire directement partie d'un réseau IP via wifi.

De nombreuses autres variantes sont possibles en fonction des circonstances, et l'on rappelle à cet égard que l'invention ne se limite pas aux exemples décrits et représentés.

## Revendications

1. Appareil électrique pour laisser ou non une source de courant alternatif pour une installation électrique domestique ou tertiaire alimenter une charge (524), en fonction d'ordres reçus par ledit appareil via un réseau radiofréquence, ledit appareil étant configuré pour faire partie dudit réseau radiofréquence, les participants dudit réseau radiofréquence étant identifiés par une adresse qui leur est propre, ledit appareil comportant :
- une borne d'arrivée (514) configurée pour être raccordée à un pôle de ladite source de courant alternatif et une autre borne d'arrivée (513) configurée pour être raccordée à un autre pôle de ladite source de courant alternatif ;
- une borne de départ (521) configurée pour être raccordée à un point d'activation de ladite charge (524) ;
- un organe de communication radiofréquence (554) via ledit réseau radiofréquence ; et
- un organe de commutation (557) relié à ladite borne de départ (521) et à une borne conjuguée (514 ; 605), prenant soit un état bloqué où il interdit le passage de courant entre la borne conjuguée (514 ; 605) et la borne de départ (521) soit un état passant où il autorise le passage de courant entre la borne conjuguée (514 ; 605) et la borne de départ (521), ledit organe de commutation (557) étant piloté par ledit organe de communication radiofréquence (554) via une transmission de pilotage comportant une unité logique (550) reliée audit organe de communication radiofréquence (554) ainsi qu'un actionneur électromagnétique (556) dudit organe de commutation (557), relié à ladite unité logique (550) ; ladite transmission de pilotage étant configurée pour que les transitions entre l'état bloqué et l'état passant de l'organe de commutation (557) suivent des ordres reçus par ledit organe de communication radiofréquence (554) ;
ladite unité logique (550) étant configurée pour déterminer une intensité de courant à partir d'un signal fourni par un organe de mesure de courant et pour communiquer extérieurement audit appareil, via ledit organe de communication radiofréquence (554), l'intensité de courant ainsi déterminée ;
lequel appareil est **caractérisé en ce qu'**il comporte un bornier (602) configuré pour être raccordé par des câbles (604) à un organe de mesure de courant (603 ; 603, 603A, 603B) externe audit appareil ; ledit bornier (602) étant relié à ladite unité logique (550) ; ladite unité logique (550) étant configurée pour déterminer ladite intensité de courant à partir du signal présent audit bornier (602) ;
grâce à quoi lorsque ledit point d'activation de ladite charge (524) est une borne de commande (122) d'un contacteur de puissance (100) distinct dudit appareil (500A) avec les bornes de départ (119, 121) dudit contacteur de puissance (100) raccordées par des câbles (131, 132) à ladite charge (524) et avec ledit organe de mesure de courant (603 ; 603, 603A, 603B) qui est disposé sur un dit câble (131, 132) raccordant ladite charge (524) à une dite borne de départ (119, 121) dudit contacteur de puissance (100), l'intensité de courant communiquée extérieurement par ledit appareil (500A) via ledit organe de communication radiofréquence (554) est l'intensité consommée par ladite charge (524).

2. Appareil selon la revendication 1, **caractérisé en ce que** ladite unité logique (550) est configurée pour que la seule intensité de courant qu'elle détermine et communique extérieurement audit appareil via ledit organe de communication radiofréquence (554) est celle déterminée à partir dudit signal présent audit bornier (602).

3. Appareil selon l'une quelconque des revendications 1 ou 2, **caractérisé en ce que** ledit signal présent audit bornier (602) est une différence de potentiel entre deux points de connexion dudit bornier (602), ladite source de courant alternatif étant monophasée.

4. Appareil selon l'une quelconque des revendications 1 ou 2, **caractérisé en ce que** ledit signal présent audit bornier (602) est une pluralité différences de potentiel entre deux points de connexion dudit bornier (602), ladite source de courant alternatif étant triphasée.

5. Appareil selon l'une quelconque des revendications 1 à 4, **caractérisé en ce que** ladite borne conjuguée est ladite borne d'arrivée (514).

6. Appareil selon l'une quelconque des revendications 1 à 4, **caractérisé en ce que** ladite borne conjuguée (605) est une borne supplémentaire distincte de ladite borne d'arrivée (514), grâce à quoi ni ladite borne de départ (521) ni ladite borne conjuguée (605) n'est portée au potentiel de l'un des pôles de ladite source de courant alternatif.

7. Circuit électrique d'une installation électrique domestique ou tertiaire, comportant :
- un appareil (500A) selon l'une quelconque des revendications 1 à 6 ;
- une charge (524) que ledit appareil (500A) laisse ou non être alimentée par une source de courant alternatif en fonction d'ordres reçus par radiofréquence par ledit appareil (500A) via ledit réseau radiofréquence ;
- un contacteur de puissance (100), distinct dudit appareil (500A), comportant des bornes de départ (119, 121) raccordées par des câbles (131, 132) à ladite charge (524) et une borne de commande (122) raccordée par un câble (525) à ladite borne de départ (521) dudit appareil (500A), ladite borne de commande (112) dudit contacteur (100) formant ledit point d'activation de ladite charge (524) ; et
- un organe de mesure de courant (603 ; 603, 603A, 603B) disposé sur un dit câble (131, 132) raccordant ladite charge (524) à l'une desdites bornes de départ (119, 121) dudit contacteur de puissance (100), l'intensité de courant communiquée extérieurement par ledit appareil (500A) via ledit organe de communication radiofréquence (554) étant l'intensité consommée par ladite charge (524).

8. Circuit électrique selon la revendication 7, **caractérisé en ce qu'**il comporte un appareil station de base (601) pour mettre en œuvre ledit réseau radiofréquence et former passerelle vers un réseau IP.

9. Circuit électrique selon l'une quelconque des revendications 7 ou 8, **caractérisé en ce que** ledit organe de mesure de courant est une boucle ampèremétrique (603 ; 603, 603A, 603B).

10. Circuit électrique selon l'une quelconque des revendication 7 à 9, **caractérisé en ce que** ledit appareil (500A) pour laisser ou non ladite source de courant alternatif alimenter ladite charge (524) et ledit appareil station de base (601) sont au format modulaire.

## Patentansprüche

1. Elektrische Vorrichtung, um eine Wechselstromquelle für eine elektrische Haus- oder Tertiärinstallation eine Last (524) in Abhängigkeit von Befehlen zu versorgen oder nicht, die von der Vorrichtung über ein Funkfrequenznetz empfangen werden, wobei die Vorrichtung so konfiguriert ist, dass es Teil des Funkfrequenznetzes ist, wobei die Teilnehmer des Funkfrequenznetzes durch eine eigene Adresse identifiziert werden, wobei die Vorrichtung Folgendes umfasst:
- eine Eingangsklemme (514), die so konfiguriert ist, dass sie an einen Pol der Wechselstromquelle angeschlossen ist, und eine andere Eingangsklemme (513), die so konfiguriert ist, dass sie an einen anderen Pol der Wechselstromquelle angeschlossen ist;
- eine Startklemme (521), die so konfiguriert ist, dass sie an einen Aktivierungspunkt der Last (524) angeschlossen ist;
- ein Funkkommunikationselement (554) über das Funkfrequenznetz; und
- ein Schaltelement (557), das mit der Startklemme (521) und einer konjugierten Klemme (514; 605) verbunden ist und entweder einen gesperrten Zustand annimmt, in dem es den Stromfluss zwischen der konjugierten Klemme (514; 605) und der Startklemme (521) verhindert, oder einen durchgehenden Zustand annimmt, in dem es den Stromfluss zwischen der konjugierten Klemme (514; 605) und der Startklemme (521) erlaubt, wobei das Schaltelement (557) von dem Funkkommunikationselement (554) über eine Steuerübertragung gesteuert wird, die eine Logikeinheit (550) umfasst, die mit dem Funkkommunikationselement (554) verbunden ist, sowie einen elektromagnetischen Aktuator (556) des Schaltelements (557), der mit der Logikeinheit (550) verbunden ist; wobei die Steuerübertragung so konfiguriert ist, dass die Übergänge zwischen dem gesperrten Zustand und dem durchgehenden Zustand des Schaltelements (557) den von dem Funkkommunikationselement (554) empfangenen Befehlen folgen;
wobei die Logikeinheit (550) so konfiguriert ist, dass sie eine Stromstärke aus einem von einem Strommesselement gelieferten Signal bestimmt und die so ermittelte Stromstärke über das Funkkommunikationselement (554) extern an diese Vorrichtung übermittelt;
wobei die Vorrichtung **dadurch gekennzeichnet ist, dass** sie eine Klemmleiste (602) aufweist, die so konfiguriert ist, dass sie über Kabel (604) an ein Strommesselement (603; 603, 603A, 603B) angeschlossen ist, das extern an diese Vorrichtung angeschlossen ist; wobei die Klemmleiste (602) mit der Logikeinheit (550) verbunden ist; wobei die Logikeinheit (550) so konfiguriert ist, dass sie die Stromstärke aus dem an dieser Klemmleiste (602) vorhandenen Signal bestimmt;
wodurch, wenn der Aktivierungspunkt der Last (524) eine Steuerklemme (122) eines von der Vorrichtung (500A) getrennten Leistungsschalters (100) ist, wobei die Startklemmen (119, 121) des Leistungsschalters (100) über Kabel (131, 132) an die Last (524) angeschlossen sind und wobei das Strommesselement (603 ; 603, 603A, 603B) an einem Kabel (131, 132) angeordnet ist, das die Last (524) an eine Startklemme (119, 121) des Leistungsschalters (100) anschließt, die von der Vorrichtung (500A) über die Funkkommunikationsvorrichtung (554) extern übermittelte Stromstärke die von der Last (524) verbrauchte Stromstärke ist.

2. Vorrichtung nach Anspruch 1, **dadurch gekennzeichnet, dass** die Logikeinheit (550) so konfiguriert ist, dass die einzige Stromstärke, die sie bestimmt und extern über das Funkkommunikationselement (554) an die Vorrichtung übermittelt, die Stromstärke ist, die aus dem an der Klemmleiste (602) vorhandenen Signal bestimmt wird.

3. Vorrichtung nach einem der Ansprüche 1 oder 2, **dadurch gekennzeichnet, dass** das an der Klemmleiste (602) vorhandene Signal eine Potenzialdifferenz zwischen zwei Verbindungspunkten der Klemmleiste (602) ist, wobei die Wechselstromquelle einphasig ist.

4. Vorrichtung nach einem der Ansprüche 1 oder 2, **dadurch gekennzeichnet, dass** das an der Klemmleiste (602) vorhandene Signal eine Vielzahl von Potenzialdifferenzen zwischen zwei Verbindungspunkten der Klemmleiste (602) ist, wobei die Wechselstromquelle dreiphasig ist.

5. Vorrichtung nach einem der Ansprüche 1 bis 4, **dadurch gekennzeichnet, dass** die konjugierte Klemme die Eingangsklemme (514) ist.

6. Vorrichtung nach einem der Ansprüche 1 bis 4, **dadurch gekennzeichnet, dass** die konjugierte Klemme (605) eine zusätzliche Klemme ist, die von der Eingangsklemme (514) getrennt ist, wodurch weder die Ausgangsklemme (521) noch die konjugierte Klemme (605) auf das Potenzial eines der Pole der Wechselstromquelle gebracht werden.

7. Stromkreis einer Haushalts- oder Tertiärstromanlage, umfassend:
- eine Vorrichtung (500A) nach einem der Ansprüche 1 bis 6;
- eine Last (524), die die Vorrichtung (500A) je nach den von der Vorrichtung (500A) über das Funkfrequenznetz empfangenen Funkfrequenzbefehlen von einer Wechselstromquelle versorgt wird oder nicht;
- einen von der Vorrichtung (500A) getrennten Leistungsschalter (100), der Startklemmen (119, 121) umfasst, die über Kabel (131, 132) an die Last (524) angeschlossen sind, und eine Steuerklemme (122), die über ein Kabel (525) an die Startklemme (521) der Vorrichtung (500A) angeschlossen ist, wobei die Steuerklemme (122) des Schalters (100) den Aktivierungspunkt der Last (524) bildet; und
- ein Strommesselement (603; 603, 603A, 603B), das an einem Kabel (131, 132) angeordnet ist, das die Last (524) an eine der Startklemmen (119, 121) des Leistungsschalters (100) anschließt, wobei die von der Vorrichtung (500A) über das Funkkommunikationselement (554) extern übermittelte Stromstärke die von der Last (524) verbrauchte Stromstärke ist.

8. Stromkreis nach Anspruch 7, **dadurch gekennzeichnet, dass** er eine Basisstationsvorrichtung (601) umfasst, um das Funkfrequenznetzwerk umzusetzen und ein Gateway zu einem IP-Netz zu bilden.

9. Stromkreis nach einem der Ansprüche 7 oder 8, **dadurch gekennzeichnet, dass** das Strommesselement eine Stromschleife (603; 603, 603A, 603B) ist.

10. Stromkreis nach einem der Ansprüche 7 bis 9, **dadurch gekennzeichnet, dass** die Vorrichtung (500A), um zuzulassen oder nicht, dass die Wechselstromquelle die Last (524) vergorgt, und die Basisstationsvorrichtung (601), modular aufgebaut sind.

## Claims

1. Electrical apparatus for allowing or not an alternating current source for a domestic or tertiary electrical installation to supply a load (524), according to commands received by said apparatus via a radio-frequency network, said apparatus being configured to be part of said radio-frequency network, the participants of said radio-frequency network being identified by an address specific to them, said apparatus comprising:
- an incoming terminal (514) configured to be connected to a pole of said alternating current source and another incoming terminal (513) configured to be connected to another pole of said alternating current source;
- an outgoing terminal (521) configured to be connected to a point of activation of said load (524);
- a member for radio-frequency communication (554) via said radio-frequency network; and
- a switching member (557) connected to said outgoing terminal (521) and to a conjugate terminal (514; 605), taking either an off state where it prohibits the passage of current between the conjugate terminal (514; 605) and the outgoing terminal (521) or an on state where it enables the passage of current between the conjugate terminal (514; 605) and the outgoing terminal (521), said switching member (557) being controlled by said radio-frequency communication member (554) via a control transmission comprising a logic unit (550) connected to said radio-frequency communication member (554) as well as an electromagnetic actuator (556) of said switching member (557), connected to said logic unit (550); said control transmission being configured so that the transitions between the off state and the on state of the switching member (557) follow commands received by said radio-frequency communication member (554);
said logic unit (550) being configured to determine a current intensity from a signal provided by a current-measuring member and to communicate externally to said apparatus, via said radio-frequency communication member (554), the current intensity thus determined;
which apparatus is **characterised in that** it includes a terminal block (602) configured to be connected by cables (604) to a current-measuring member (603; 603, 603A, 603B) external to said apparatus; said terminal block (602) being connected to said logic unit (550); said logic unit (550) being configured to determine said current intensity from the signal present on said terminal block (602);
whereby when said point of activation of said load (524) is a control terminal (122) of a power contactor (100) separate from said apparatus (500A) with the outgoing terminals (119, 121) of said power contactor (100) connected by cables (131, 132) to said load (524) and with said current-measuring member (603); 603, 603A, 603B) which is disposed on a cable (131, 132) connecting said load (524) to an outgoing terminal (119, 121) of said power contactor (100), the current intensity communicated externally by said apparatus (500A) via said radio-frequency communication member (554) is the intensity consumed by said load (524).

2. Apparatus according to claim 1, **characterised in that** said logic unit (550) is configured so that the only current intensity it determines and communicates externally to said apparatus via said radio-frequency communication member (554) is that determined from said signal present on said terminal block (602).

3. Apparatus according to any one of claims 1 or 2, **characterised in that** said signal present on said terminal block (602) is a potential difference potential between two connection points of said terminal block (602), said alternating current source being single-phase.

4. Apparatus according to any one of claims 1 or 2, **characterised in that** said signal present on said terminal block (602) is a plurality of potential differences between two connection points of said terminal block (602), said alternating current source being three-phase.

5. Apparatus according to any one of claims 1 to 4, **characterised in that** said conjugate terminal is said incoming terminal (514).

6. Apparatus according to any one of claims 1 to 4, **characterised in that** said conjugate terminal (605) is an additional terminal distinct from said incoming terminal (514), by means of which neither said outgoing terminal (521) nor said conjugate terminal (605) is brought to the potential of one of the poles of said alternating current source.

7. Electrical circuit of a domestic or tertiary electrical installation, comprising:
- an apparatus (500A) according to any one of claims 1 to 6;
- a load (524) that said apparatus (500A) lets or not be powered by an alternating current source according to radio-frequency commands received by said apparatus (500A) via said radio-frequency network;
- a power contactor (100), separate from said apparatus (500A), comprising outgoing terminals (119, 121) connected by cables (131, 132) to said load (524) and a control terminal (122) connected by a cable (525) to said outgoing terminal (521) of said apparatus (500A), said control terminal (122) of said contactor (100) forming said point of activation of said load (524); and
- a current-measuring member (603; 603, 603A, 603B) disposed on a said cable (131, 132) connecting said load (524) to one of said outgoing terminals (119, 121) of said power contactor (100), the current intensity communicated externally by said apparatus (500A) via said radio-frequency communication member (554) being the intensity consumed by said load (524).

8. Electrical circuit according to claim 7, **characterised in that** it includes a base station apparatus (601) to implement said radio-frequency network and to form a gateway to an IP network.

9. Electrical circuit according to any one of claims 7 or 8, **characterised in that** said current-measuring member is an amperometric loop (603; 603, 603A, 603B).

10. Electrical circuit according to any one of claims 7 to **9, characterised in that** said apparatus (500A) for allowing or not said alternating current source to supply said load (524) and said base-station apparatus (601) are in modular format.
